# EUROPÄISCHE PATENTSCHRIFT

(11) **EP 3 832 022 B1**
(45) Veröffentlichungstag und Bekanntmachung des Hinweises auf die Patenterteilung: **21.09.2022**
(21) Anmeldenummer: 20211020.1
(22) Anmeldetag: 01.12.2020
(51) Int. Cl.: E01C 23/088, E01C 23/12, B28D 7/02, B65G 69/18

(54) **BODENBEARBEITUNGSMASCHINE MIT STAUBABSAUGUNG UND ROTIERBAREN FILTERKARTUSCHEN**
SOIL TREATMENT MACHINE WITH DUST EXTRACTION AND ROTATING FILTER CARTRIDGES
MACHINE DE TRAITEMENT DE SOLS AVEC EXTRACTION DE POUSSIÈRE ET CARTOUCHES FILTRANTES ROTATIVES

(30) Priorität: 03.12.2019 DE 102019132886
(43) Veröffentlichungstag der Anmeldung: 09.06.2021
(73) Patentinhaber: Wirtgen GmbH, 53578 Windhagen (DE)
(72) Erfinder: Drumm, Stephan, 53560 Vettelschoß (DE)
(74) Vertreter: Ruttensperger Lachnit Trossin Gomoll

(56) Entgegenhaltungen:
- DE-B3-102004 007 716
- US-B2- 8 220 875

## Beschreibung

Die vorliegende Erfindung betrifft eine mobile Bodenbearbeitungsmaschine, wie etwa eine Straßenfräse, einen Recycler oder einen Surface-Miner, wobei die Bodenbearbeitungsmaschine umfasst:
- eine Arbeitsvorrichtung zur Material abtragenden Bearbeitung eines Bereichs eines Bodens, und
- eine Absaugeinrichtung, welche dazu ausgebildet ist, staubbelastete Luft an wenigstens einem Absaugort aus wenigstens einem Maschinenbereich abzusaugen und abgesaugte Luft an einem vom Absaugort verschiedenen Abblasort auszublasen,
wobei die Absaugeinrichtung eine längs eines Betriebsströmungswegs vom wenigstens einen Absaugort zum Abblasort angeordnete Filtervorrichtung aufweist, wobei die Filtervorrichtung umfasst:
- ein Filtergehäuse,
- einen im Filtergehäuse aufgenommenen Filterkörper, wobei der Filterkörper dazu ausgebildet ist, Staubpartikel aus der die Filtervorrichtung durchströmenden Luft zu entfernen, und
- eine Reinigungsvorrichtung, welche dazu ausgebildet ist, Staubpartikel, welche sich im Filterbetrieb am Filterkörper ansammeln, vom Filterkörper zu entfernen.

Eine solche Bodenbearbeitungsmaschine in Ausführungsform einer Boden-, insbesondere Straßenfräsmaschine ist beispielsweise aus der DE 10 2004 007 716 B3 bekannt.

Das von der Arbeitsvorrichtung abgetragene Bodenmaterial wird - im Stand der Technik ebenso wie bevorzugt auch in der vorliegenden Erfindung - ausgehend von einem Arbeitsvorrichtungsgehäuse, in welchem die Arbeitsvorrichtung zur Ausführung einer Abtragsbewegung beweglich aufgenommen ist, mittels eines Transportbandes zu einem Abgabeort gefördert. Das Arbeitsvorrichtungsgehäuse schirmt als Arbeitsschutzvorrichtung die Umgebung der Arbeitsvorrichtung vor der Arbeitsvorrichtung und dem durch sie abgetragenen Bodenmaterial ab. Am Abgabeort wird das geförderte abgetragene Bodenmaterial in der Regel abgeworfen, häufig auf ein die mobile Bodenbearbeitungsmaschine begleitendes Fahrzeug, welches das aufgenommene abgetragene Bodenmaterial entsorgt oder weiterverarbeitet.

Am Eingriffsort der abtragenden Arbeitsvorrichtung mit dem zu bearbeitenden Boden werden Bodenmaterialstücke unterschiedlich großer Körnung aus dem Boden herausgetrennt. Diese Bodenmaterialstücke bewegen sich mit hoher kinetischer Energie in dem Arbeitsvorrichtungsgehäuse und prallen auf die Wandung des Arbeitsvorrichtungsgehäuses, kollidieren untereinander oder/und mit Wirkflächen von Auswerfern an der Arbeitsvorrichtung sowie mit der Arbeitsvorrichtung selbst. Bei diesen Kollisionen entstehen, wie schon beim Abtrag des Bodenmaterials durch die Arbeitsvorrichtung, Stäube unterschiedlicher Körnung bis hin zum Feinstaub. Es sind diese Stäube, die die durch die Absaugeinrichtung abgesaugte Luft belasten. Die Stäube können in dem Arbeitsvorrichtungsgehäuse oder/und beim Transport des abgetragen Bodenmaterials in den das abgetragene Bodenmaterial umgebenden Luftraum übergehen. Dies gilt für den Stand der Technik ebenso wie für die vorliegende Erfindung.

Bereits die DE 102 23819 A1 lehrt, die durch die Bodenbearbeitung entstehende staubbelastete Luft an einem näher bei der Arbeitsvorrichtung gelegenen Absaugort abzusaugen und in einem weiter von der Arbeitsvorrichtung entfernt gelegenen Abblasort auf das Transportband abzublasen. Durch eine Berieselungseinrichtung, welche die Umgebung des Abblasorts mit Wasser berieselt oder/und durch eine elektrostatische Abscheidevorrichtung kann Staub in der am Abblasort abgeblasenen Luft aus der Luft entfernt werden.

Die DE 10 2004 007 716 B3 lehrt, zur Erhöhung der Standfestigkeit eines die staubbelastete Luft fördernden Fördergebläses eine Filtervorrichtung im Strömungsweg der staubbelasteten Luft vom Absaugort zum Abblasort stromaufwärts des Fördergebläses anzuordnen und so die Luft zu reinigen, bevor sie das Fördergebläse erreicht. Die bekannte Filtervorrichtung umfasst ein Filtergehäuse, in welchen eine Mehrzahl von sogenannten "Filterkartuschen" als Filterkörper aufgenommen ist, um eine möglichst große Filterfläche zu erzielen.

Da die Filterkörper auf ihrer Schmutzseite mit zunehmender Dauer des Filterbetriebs einen Filterkuchen bilden, welcher bei Überschreiten einer kritischen Größe die Filterwirkung des jeweiligen Filterkörpers beeinträchtigt, lehrt die DE 10 2004 007 716 B3 weiterhin, die Filterkörper durch Vibration oder durch einen auf der Reinseite des Filterkörpers realisierten Druckluftimpuls vom Filterkuchen zu befreien. Der vom Filterkörper abgereinigte Filterkuchen kann durch eine Formation, etwa eine Klappe oder ein verformbarer Bereich, im Boden des Filtergehäuses auf das Transportband abgegeben werden. Das Filtergehäuse ist über dem Transportband angeordnet. Das Transportband ist durch eine Abdeckung von der Außenumgebung abgeschirmt, sodass auf dem Transportband aufliegendes Bodenmaterial nicht oder nur in sehr geringem Umfang vom Transportband während der Förderung bis zum Abgabeort in die Umgebung gelangen kann.

Wenngleich die aus der DE 10 2004 007 716 B3 bekannte Bodenbearbeitungsmaschine während einer Bodenbearbeitung die Staubbelastung in ihrer unmittelbaren Umgebung erheblich reduziert, ist hierfür eine große Filterfläche in der Filtervorrichtung notwendig, welche durch eine entsprechende hohe Anzahl an Filterkörpern im Filtergehäuse realisiert werden muss. Hierdurch entsteht ein hoher Bauraumbedarf sowie ein hoher Aufwand beim Einbau und beim regelmäßigen Austausch der Filterkörper im Filtergehäuse.

Es ist daher Aufgabe der vorliegenden Erfindung, die eingangs genannte mobile Bodenbearbeitungsmaschine derart weiterzubilden, dass mit einer geringeren Anzahl an Filterkörpern als in der DE 10 2004 007 716 B3 - dort sind beispielhaft 10 Filterkartuschen gleichzeitig im Filtergehäuse der bekannten Bodenbearbeitungsmaschine im Betrieb - eine gleiche oder sogar eine bessere Reinigung der bei der Bodenbearbeitung entstehenden staubbelasteten Luft möglich wird.

Diese Aufgabe wird erfindungsgemäß durch eine mobile Bodenbearbeitungsmaschine der eingangs genannten Art gelöst, bei welcher der Filterkörper um eine Drehachse drehbar im Filtergehäuse aufgenommen ist, wobei die Filtervorrichtung einen Drehantrieb aufweist, welcher dazu ausgebildet ist, den Filterkörper in Drehung zu versetzen.

Das Filtergehäuse der vorliegenden Erfindung, ebenso wie das aus der DE 10 2004 007 716 B3 bekannte Filtergehäuse, ist bevorzugt über einem Transportmittel einer Transportvorrichtung zur Förderung des abgetragenen Bodenmaterials von dem Arbeitsvorrichtungsgehäuse weg zu einem Abgabeort angeordnet. Auf dieses Transportmittel kann Staubpartikelmaterial vorteilhaft vom Filtergehäuse aus abgegeben werden. Aus Gründen effizienter Bauraumausnutzung ist der Filterkörper bevorzugt derart angeordnet, dass seine Drehachse in einer Ebene angeordnet ist, welche relativ zur Transportrichtung um nicht mehr als 15° um eine zum Aufstandsuntergrund der Maschine parallele und zur Transportrichtung orthogonale Neigeachse geneigt ist. Vorzugsweise ist diese Ebene, besonders bevorzugt ist die Drehachse parallel zur Transportrichtung angeordnet. Gemäß dieser besonders bevorzugten Weiterbildung erstrecken sich die Filterkartuschen der bekannten Filtervorrichtung während der Bodenbearbeitung und damit während eines Filterbetriebs zwar relativ zum Aufstandsuntergrund der Bodenbearbeitungsmaschine geneigt, jedoch mit einer substantiellen Verlaufskomponente parallel zum Aufstandsuntergrund.

Da der Aufstandsuntergrund der Bodenbearbeitungsmaschine zumeist eben und waagerecht ist oder gegenüber der Waagerechten nur vernachlässigbar geneigt ist, wirkt die Schwerkraft zu einem im Filterbetrieb entgegen der Schwerkraftwirkungsrichtung weisenden Abschnitt der Schmutzseite des Filterkörpers hin. Die Schwerkraft belastet daher das sich auf der Schmutzseite dieses Filterkörperabschnitts als Filterkuchen ansammelnde Staubpartikelmaterial zum Filterkörper hin, was dessen Entfernung vom Filterkörper erschwert. Durch die oben genannten mechanischen oder/und pneumatischen Reinigungsmaßnahmen, wie Vibration oder/und Gasdruckimpulse, wird so in der Regel an der bekannten Filtervorrichtung nur der in Schwerkraftwirkungsrichtung weisende Abschnitt der Schmutzseite des Filterkörpers zuverlässig von dem sich bildenden Filterkuchen befreit, während sich der entgegen der Schwerkraftwirkungsrichtung weisende Abschnitt der Schmutzseite des Filterkörpers rasch zusetzt und seine Filterwirkung einbüßt.

Die Filterkörper des Standes der Technik sind grob-zylindrische Filterkörper, also Filterkörper mit einer zylindrischen Einhüllenden, wobei die Mantelfläche der Filterkörper den größten Anteil der wirksamen Filterfläche darstellt. Die Oberseiten der Mantelflächen, welche im Betrieb von der Transportvorrichtung weg und somit entgegen der Schwerkraftwirkungsrichtung weisen, sind nach einer gewissen Betriebsdauer dauerhaft mit Filterkuchen belegt, der trotz der genannten Reinigungsmaßnahmen an den Oberseiten der Mantelflächen verbleibt. Dieses Beharren des Filterkuchens auf der Oberseite der Mantelflächen der Filterkörper wird noch verstärkt durch einerseits einen Feuchtegehalt des Staubes, welcher ein Verbacken des überwiegend mineralischen Staubes fördert, und durch andererseits eine plissierte Ausführung von um die Zylinder- oder Konusachse der Filterkörper umlaufendem Filtermaterial, sodass sich Filterkuchen in im Filtermaterial eingesenkten Falten regelrecht festsetzen kann.

Durch die drehbare Anordnung des Filterkörpers kann jeder beliebige in Umfangsrichtung um die Drehachse des Filterkörpers verlaufende Abschnitt desselben in eine Richtung gedreht werden, in welche die Schwerkraft ein Ablösen des Filterkuchens vom Filterkörper unterstützt. Somit kann dauerhaft durch die Reinigungsvorrichtung die vollständige oder nahezu die vollständige Filterfläche des Filterkörpers für den Filterbetrieb erhalten bleiben. In der Folge kann die immer noch benötigte verhältnismäßig große Filterfläche durch eine geringere Anzahl an Filterkörpern, oder noch allgemeiner ausgedrückt durch ein geringeres von Filterkörpern eingenommenes Volumen bereitgestellt werden. Die Bereitstellung der benötigten Filterfläche erfordert bei Verwendung des oben beschriebenen drehbaren Filterkörpers einen erheblich geringeren Bauraum als im Stand der Technik. Die geringere Anzahl an Filterkörpern erfordert außerdem weniger Aufwand beim Austausch verschlissener Filterkörper gegen unverschlissene.

In der vorliegenden Anmeldung ist zur Beschreibung der vorgestellten Erfindung von einem Filterkörper die Rede. Dies dient lediglich der Veranschaulichung und ist keine Mengenangabe. Wenngleich ein einziger Filterkörper ausreichen kann, weist die Filtervorrichtung der vorliegenden Erfindung bevorzugt eine Mehrzahl von Filterkörpern auf, von welchen bevorzugt jeder um eine Drehachse drehbar im Filtergehäuse gelagert ist. Dann sind bevorzugt die Drehachsen der Filterkörper zur vorteilhaft effizienten Ausnutzung des vorhandenen Bauraums zueinander parallel.

Auch die Filterkörper der vorliegenden Erfindung sind bevorzugt grob-zylindrische Filterkörper mit einer zylindrischen Einhüllenden, wobei die Zylinderachse dann mit der Drehachse des Filterkörpers zusammenfällt, sodass die Einhüllende nicht nur den Bauraum, sondern auch den Bewegungsraum des drehbaren Filterkörpers definiert. Alternativ können die Filterkörper bevorzugt grob-konische Filterkörper sein, die dann eine konische Einhüllende aufweisen können. Dann ist aus dem oben genannten Grund die Konusachse bevorzugt auch die Drehachse des Filterkörpers. Zu den grob-konischen Filterkörpern gehören auch kegelstumpfförmige Filterkörper. An ihren Längsenden können die Filterkörper von einer idealen Zylinder- oder Konusform abweichen, etwa weil die Filterkörper eine Kopplungsformation zur Kopplung mit einer Kopplungsgegenformation am Filtergehäuse erfordern oder/und weil von der Einhüllenden eingehülltes poröses Filtermaterial des Filterkörpers an beiden Längsendbereichen des Filterkörpers körperlich, etwa durch entsprechende Endstücke lagedefiniert sein soll.

Die mobile Bodenbearbeitungsmaschine ist bevorzugt eine selbstfahrende Bodenbearbeitungsmaschine, welche einen von einer Mehrzahl von Ketten- oder/und Radlaufwerken höhenverstellbar getragenen Maschinenrahmen aufweist. Der Maschinenrahmen trägt wiederum - bevorzugt bestimmungsgemäß lösbar - die Arbeitsvorrichtung, welche gemäß einer bevorzugten Ausführungsform eine Fräswalze mit einem zylindrischen Grundkörper ist, auf welchem Fräsmeißel, und vorzugsweise auch Auswerfer, angeordnet sind. Das eingangs genannte Arbeitsvorrichtungsgehäuse, welches die Bodenbearbeitungsmaschine zur Abschirmung der Arbeitsvorrichtung in vorteilhafter Weiterbildung aufweist, ist dann ein sogenannter "Fräswalzenkasten". Zum erleichterten Wechsel der während der abtragenden Bodenbearbeitung stark verschleißbeanspruchten Fräsmeißel sind an der Außenseite des zylindrischen Grundkörpers Meißelwechselhalter angeordnet, in welchen Fräsmeißel bestimmungsgemäß lösbar aufgenommen sind. Zum erleichterten Abtransport des durch die Fräsmeißel vom Boden abgetragenen Bodenmaterials sind die Meißelwechselhalter bevorzugt grob wendelförmig auf dem Grundkörper angeordnet, um bei Rotation der Fräswalze eine auf das abgetragene Bodenmaterial ausgeübte axiale Förderwirkung längs der Rotationsachse der Fräswalze zu erzielen. Üblicherweise verlaufen von jedem axialen Längsende der Fräswalze je wenigstens eine Meißelwechselhalter-Wendel zur axialen Fräswalzenmitte hin, um von jedem Längsende eine axiale Förderwirkung zur axialen Fräswalzenmitte zu erzeugen.

Zur Förderung der staubbelasteten Luft kann die Bodenbearbeitungsmaschine in vorteilhafter Weiterbildung der Erfindung ein Fördergebläse aufweisen, wobei die Filtervorrichtung, insbesondere der Filterkörper, bevorzugt auf der Saugseite des Fördergebläses liegt, sodass die vom Fördergebläse geförderte Luft das Fördergebläse in gereinigtem Zustand erreicht. Je weniger Staubpartikel in der geförderten Luft enthalten sind, desto weniger abrasiv wirkt die geförderte Luft auf das Fördergebläse. Das Fördergebläse kann einen gegenüber staubbelasteter Luft robusten Axiallüfter umfassen. Alternativ kann das Fördergebläse einen weniger Bauraum als ein Axiallüfter gleicher Förderleistung einnehmenden Radiallüfter umfassen.

Wenn in der vorliegenden Anmeldung von einer bestimmungsgemäß lösbaren Anordnung die Rede ist, so ist damit eine zerstörungsfrei lösbare Anordnung bezeichnet, wie sie beispielsweise durch Schraubverbindungen, Bajonettverbindungen und dergleichen bewirkt werden kann, im Gegensatz zu nicht-lösbaren Anordnungen, wie beispielsweise Schweiß- oder Nietverbindungen, welche lediglich zerstörend aufgehoben werden können.

Die durch die Rotation des Filterkörpers am Filterkörper erzielbare Reinigungswirkung kann noch dadurch erhöht werden, dass parallel zur Drehachse mit Abstand von dieser eine Abstreiferleiste angeordnet ist, welche während einer Drehbewegung des Filterkörpers intermittierend, etwa bei Verwendung von in Umfangsrichtung um die Drehachse plissierten Materials, oder dauerhaft, etwa bei Verwendung eines zylindrischen oder konischen Filtermaterials, in Berührkontakt mit dem Filterkörper steht. So kann durch Rotation des Filterkörpers von der Abstreiferleiste Filterkuchen auf der Schmutzseite des Filterkörpers von diesem mechanisch abgestreift werden. Im bevorzugten Fall einer Mehrzahl von Filterkörpern wirkt mit jedem Filterkörper wenigstens eine Abstreiferleiste zusammen. Die Abstreiferleiste ist bevorzugt starr am Filtergehäuse angeordnet.

Um lokal unterschiedlich hohe Abstreifkräfte auf den Filterkörper ausüben zu können, kann die Abstreiferleiste an ihrem mit dem Filterkörper in Berührkontakt stehenden Randbereich mit längs der Drehachsenrichtung aufeinander folgenden Vorsprüngen ausgebildet sein, welche von einem dem Filterkörper ferner liegenden Trägerbereich der Abstreiferleiste auskragen. Einzelne Vorsprünge können sich unterschiedlich stark elastisch verformen und so aufgrund ihrer unterschiedlichen elastischen Verformung unterschiedlich große Abstreifkräfte an ihrem dem Filterkörper nähergelegenen Endbereich ausüben.

Für die Kraft, die ein Vorsprung der Abstreiferleiste auf den Filterkörper ausübt, kommt es zum einen auf die zwischen dem Vorsprung und dem Filterkörper auftretende Flächenpressung und zum anderen auf die Verformungssteifigkeit, insbesondere Biegesteifigkeit, des Vorsprungs an. Poröses Filtermaterial des Filterkörpers kann empfindlich sein und daher durch eine zu hohe Flächenpressung und zu hohe Biegesteifigkeit leicht beschädigt werden. Ein guter Kompromiss aus mäßiger Flächenpressung und nicht zu hoher Verformungssteifigkeit wird dadurch erhalten, dass wenigstens ein Teil der Vorsprünge, vorzugsweise alle Vorsprünge, einen vom Trägerbereich weiter entfernt gelegenen, axial bezogen auf die Drehachse längeren Abstreifbereich und einen axial schmäleren, den Abstreifbereich mit dem Trägerbereich verbindenden Stegbereich aufweist. Dann kann die Belastung des Filtermaterials durch die Abstreiferleiste durch Dimensionierung von Stegbereichen so fein abgestimmt werden, dass die Abstreiferleiste mit erhöhter Beständigkeit sogar aus Metall, bevorzugt aus nicht-rostendem Stahl hergestellt sein kann. Der Abstreifbereich liegt vorzugsweise wenigstens zeitabschnittsweise am Filterkörper an. Der Stegbereich stellt eine Verformbarkeit des Vorsprungs und damit eine elastische Verlagerbarkeit des Abstreifbereichs relativ zum Trägerbereich bereit.

Bevorzugt weist der Filterkörper ein um die Drehachse umlaufendes poröses Filtermaterial auf. Zur Erhöhung der Filterfläche, an welcher Staubpartikel aus der staubbelasteten Luft entfernt werden und welche somit ein Maß für das Reinigungsvermögen des Filterkörpers darstellt, ist das Filtermaterial bevorzugt in Umlaufrichtung alternierend konvex und konkav gekrümmt. Dabei ist eine Betrachtung des Filterkörpers von außen radial in Richtung auf seine Drehachse zu für die Beurteilung von konvexer und konkaver Krümmung maßgeblich. Das Filtermaterial kann um Knickachsen geknickt oder/und um Krümmungsachsen mit einem Krümmungsradius gekrümmt sein, wobei jede Knickachse oder/und jede Krümmungsachse bevorzugt mit der Drehachse des Filterkörpers jeweils eine gemeinsame Ebene aufspannt. Besonders bevorzugt ist jede Knickachse oder/und jede Krümmungsachse zur Drehachse des Filterkörpers parallel. So kann der Filterkörper beispielsweise plissiertes Filtermaterial mit hoher Filterfläche aufweisen.

Zusätzlich zur Abstreifwirkung kann die Abstreiferleiste die erzielbare Reinigungsqualität am Filterkörper durch mechanischen Impulsübertrag weiter dadurch erhöhen, dass die Abstreiferleiste radial in einen Bereich des Filterkörpers einragt, welcher zwischen den Orten radial größter Annäherung des Filtermaterials an die Drehachse und radial größter Entfernung des Filtermaterials von der Drehachse gelegen ist. Plissiertes Filtermaterial, unabhängig davon, ob es durch Knicken mit theoretisch unendlich kleinem Krümmungsradius, realistisch mit einem Krümmungsradius kleiner als 0,5 mm gefaltet oder durch Krümmen mit endlich großem Krümmungsradius, insbesondere mit einem Krümmungsradius von mehr als 0,5 mm gekrümmt ist, weist bezüglich der Drehachse eine radial äußere virtuelle Einhüllende auf und weist eine radial innere virtuelle Einhüllende auf, zwischen welchen sich das Filtermaterial vollständig oder im Wesentlichen vollständig befindet. Die virtuellen Einhüllenden berühren die jeweiligen äußeren bzw. inneren Krümmungsscheitel des Filtermaterials. Die Abstreiferleiste ragt dabei bevorzugt in einen zwischen der radial äußeren und der radial inneren Einhüllenden gelegenen Bereich ein. Bei Rotation des Filterkörpers treffen dann die konvexen Falten des plissierten Filtermaterials aufeinanderfolgend auf die Abstreiferleiste, was zum einen den oben genannten mechanischen Impuls auf das Filtermaterial bewirkt und was zum anderen temporär den Umfangsabstand zwischen zwei in Umfangsrichtung benachbarten konvexen Falten erhöht, sodass Filterkuchen, welcher sich an der radial inneren, zwischen den benachbarten konvexen Falten angeordneten konkaven Falte angesammelt hat, aufgrund des vergrößerten Umfangsabstands nach radial außen abfallen kann.

Um die Abstreiferleiste möglichst effizient einzusetzen und ihre Reinigungswirkung durch Schwerkraft zu unterstützen, greift die Abstreiferleiste bevorzugt an einem im Filterbetrieb in Schwerkraftwirkungsrichtung weisenden Abschnitt des Filterkörpers, bevorzugt der Einhüllenden des Filterkörpers, an.

Ein Abschnitt weist gemäß der vorliegenden Anmeldung in eine Richtung, wenn eine von dem Abschnitt ausgehende Flächennormale eine Komponente aufweist, welche in die angegebene Richtung weist.

Ein verschlissener Filterkörper kann dadurch besonders einfach und schnell gegen einen unverschlissenen ausgetauscht werden, wenn er an einem Längsende, bevorzugt nur an einem Längsende, mit einer Filterkörperaufnahme lösbar koppelbar ist. Dabei reicht es aus, wenn die am Filtergehäuse angeordnete Filterkörperaufnahme um die Drehachse drehbar im oder am Filtergehäuse aufgenommen ist. Der Filterkörper selbst braucht dann keinerlei Drehbarkeit bereitzustellen oder/und keinerlei Formation aufzuweisen, um von dem Drehantrieb ein Antriebsdrehmoment auf den Filterkörper zu übertragen. Eine solche mit dem Drehantrieb wechselwirkende Formation kann alleine an der Filterkörperaufnahme ausgebildet sein.

Grundsätzlich weist der Filterkörper eine bezüglich einer Betriebsströmungsrichtung der staubbelasteten Luft vom Absaugort zum Abblasort stromaufwärts eines die Filterwirkung des Filterkörpers bereitstellenden porösen Filtermaterials gelegene Schmutzseite und eine stromabwärts des Filtermaterials gelegene Reinseite auf.

Sofern in der vorliegenden Anmeldung nichts Abweichendes gesagt ist, beziehen sich die Angaben "stromaufwärts" und "stromabwärts" auf die Betriebsströmungsrichtung der staubbelasteten Luft vom Absaugort zum Abblasort.

Der Absaugort liegt näher bei der Arbeitsvorrichtung als der Abblasort, weil in einem zur Arbeitsvorrichtung führenden Luftkanal die Staubbelastung der Luft mit zunehmender Annäherung an die Arbeitsvorrichtung ansteigt.

Zusätzlich oder bevorzugt alternativ zur oben genannten Abstreiferleiste kann die Reinigungsvorrichtung zur Erhöhung der erzielbaren Reinigungswirkung eine Pneumatikvorrichtung aufweisen, welche dazu ausgebildet ist, auf der Reinseite den Luftdruck über den auf der Schmutzseite herrschenden Luftdruck hinaus zu erhöhen. Die Pneumatikvorrichtung umfasst bevorzugt wenigstens einen Pneumatik-Druckspeicher und wenigstens ein Ventil. Der Pneumatik-Druckspeicher befindet sich bevorzugt am Filtergehäuse, besonders bevorzugt außen am Filtergehäuse, sodass er den wenigstens einen Filterkörper im Inneren des Filtergehäuses nicht stört.

Um die Reinigungsmaßnahmen aufeinander abzustimmen, weist die Reinigungsvorrichtung bevorzugt eine Steuervorrichtung auf, welche sowohl den Betrieb der Pneumatikvorrichtung zur Druckerhöhung auf der Reinseite als auch den Drehbetrieb des Filterkörpers steuert.

Zur verstärkenden Kombination der Reinigungswirkung aus Drehbetrieb und Pneumatikvorrichtung ist die Steuervorrichtung bevorzugt dazu ausgebildet, den Drehantrieb und die Pneumatikvorrichtung gleichzeitig zu betreiben.

Um nicht nur durch Druckerhöhung, sondern durch Druckstöße auf der Reinseite eine zusätzliche Abwurfwirkung von Filterkuchen auf der Schmutzseite zu bewirken, ist die Steuervorrichtung bevorzugt dazu ausgebildet, die Pneumatikvorrichtung zur stoßartigen Abgabe von Pneumatikimpulsen anzutreiben.

Um zu gewährleisten, dass der Luftdruck durch die Pneumatikvorrichtung auf der Reinseite nicht immer in der gleichen Drehstellung des Filterkörpers erhöht wird, was die Drehung des Filterkörpers zumindest teilweise konterkarieren könnte, ist die Steuervorrichtung gemäß einer vorteilhaften Weiterbildung der vorliegenden Erfindung dazu ausgebildet, die Dauer eines Pneumatikimpulses oder/und den zeitlichen Abstand zwischen zwei unmittelbar aufeinander folgenden Pneumatikimpulsen derart einzustellen, dass die Dauer oder/und der Abstand vom Kehrwert der Drehzahl des Filterkörpers verschieden ist. Um eine möglichst große Anzahl an Druckstößen pro Zeiteinheit auf die Reinseite des Filterkörpers auszuüben, ist die Dauer oder/und der Abstand vorzugsweise kleiner als der Kehrwert der Drehzahl.

Um die Belastung des Filterkörpers der Filtervorrichtung im Filterbetrieb zu verringern, kann die Filtervorrichtung einen vom Filterkörper verschiedenen Vorfilter aufweisen, welcher bevorzugt außerhalb des Filtergehäuses angeordnet ist, sodass nur vorgereinigte staubbelastete Luft zum Filterkörper geleitet wird. Als derartige Vorfilter haben sich sogenannte Zyklonfilter bewährt, welche Staubpartikel oberhalb einer bestimmten Korngröße aus der staubbelasteten Luft entfernen. Somit erreichen den wenigstens einen Filterkörper im Filtergehäuse bevorzugt nur Staubpartikel unterhalb einer bestimmten Korngröße oder eines bestimmten Korngrößenbereichs. Das Filtermaterial des Filterkörpers kann hinsichtlich seiner Porosität und seiner Durchlässigkeit auf den Korngrößenbereich der Staubpartikel in der vorgereinigten Luft besonders gut abgestimmt werden, sodass die Reinigungswirkung des Filterkörpers weiter erhöht werden kann.

Die Standzeit des Filterkörpers kann dadurch erhöht werden, dass ein Filterbetrieb der Filtervorrichtung nur dann erfolgt, wenn dieser tatsächlich benötigt wird. So ist in ohnehin bereits feinstaubbelasteten Innenstädten ein Betrieb der Filtervorrichtung geboten, um eine Erhöhung der Feinstaubbelastung zu vermeiden, wohingegen während einer Bodenbearbeitung außerhalb von geschlossenen Ortschaften ein Filtern der abgesaugten staubbelasteten Luft nicht unbedingt notwendig ist. Befindet sich der Abblasort ausreichend weit von einem Fahrstand der Bodenbearbeitungsmaschine entfernt, auf welchem eine die Bodenbearbeitungsmaschine steuernde Bedienperson während einer Bodenbearbeitung tätig ist, ist die Staubbelastung der Bedienperson vernachlässigbar. Dann, wenn gemäß einer bevorzugten Weiterbildung die zunächst abgesaugte staubbelastete Luft in einen Kanal abgeblasen wird, welcher die das abgetragene Bodenmaterial fördernde Transportvorrichtung umgibt, tritt die abgeblasene Luft erst am Abgabe- bzw. Abwurfort des Bodenmaterials von der Transportvorrichtung ins Freie. Dieser Abgabeort ist während eines bestimmungsgemäßen Bodenbearbeitungsbetriebs in der Regel der am weitesten vom Fahrstand entfernte Ort der Bodenbearbeitungsmaschine.

Zum Umschalten zwischen einer Filterung der abgesaugten Luft und lediglich einer Förderung der ungefilterten oder durch einen Vorfilter, wie etwa Zyklonfilter, vorgefilterten abgesaugten Luft ohne weitere Filterwirkung kann die Filtervorrichtung ein zwischen wenigstens zwei unterschiedlichen Betriebsstellungen verstellbares Bypass-Ventil aufweisen. In einer Filter-Betriebsstellung verbindet dann das Bypass-Ventil den wenigstens einen Absaugort mit dem Abblasort unter Durchströmung des Filterkörpers. In einer Bypass-Betriebsstellung verbindet das Bypass-Ventil den wenigstens einen Absaugort mit dem Abblasort unter Umgehung des Filterkörpers. Bevorzugt weist das Bypass-Ventil nur die Filter- und die Bypass-Betriebsstellung auf.

Das Bypass-Ventil kann konstruktiv einfach aufgebaut sein. Es kann ein bewegliches Ventilbauteil aufweisen, welches eine Austrittsmündung eines stromaufwärtigen Förderkanals der staubbelasteten Luft aufweist. Durch Bewegung des Ventilbauteils kann die Austrittsmündung des stromaufwärtigen Förderkanals mit einer gewünschten von zwei Eintrittsmündungen auf einer stromabwärtigen Seite des Bypass-Ventils, insbesondere eines Trennspalts zwischen Austrittsmündung und Eintrittsmündungen, strömungsführend verbunden werden.

Grundsätzlich kann das Bypass-Ventil von Hand zwischen seinen unterschiedlichen Luftströmungswegen zugeordneten Betriebsstellungen bewegbar sein. Bevorzugt umfasst das Bypass-Ventil einen Ventilantrieb, welcher auf Betätigung eines Steuerschalters am Fahrstand der Bodenbearbeitungsmaschine das Bypass-Ventil zwischen wenigstens zwei seiner Betriebsstellungen verstellt.

Konstruktiv kann gemäß einer bevorzugten Ausführungsform der erfindungsgemäßen Bodenbearbeitungsmaschine das Bypass-Ventil in der Filter-Betriebsstellung den wenigstens einen Absaugort derart mit dem Filtergehäuse verbinden, dass ein den Filterkörper aufnehmender Innenraum des Filtergehäuses Teil der den wenigstens einen Absaugort mit dem Abblasort verbindenden Strömungsleitung für staubbelastete Luft ist. Weiter kann das Bypass-Ventil in der Bypass-Betriebsstellung den wenigstens einen Absaugort mit dem Abblasort unter Umgehung des den Filterkörper aufnehmenden Innenraums des Filtergehäuses und damit des Filterkörpers verbinden.

Ein weiteres Problem der Filtervorrichtung kann darin bestehen, dass die abgesaugte staubbelastete Luft einen hohen Feuchtigkeitsgehalt aufweist oder/und dass der Staub selbst feucht ist. Ursache hierfür kann beispielsweise eine Wassereinspritzung im Arbeitsvorrichtungsgehäuse sein, durch welche während der Bodenbearbeitung in unmittelbarer Umgebung der Arbeitsvorrichtung entstehenden Staub frühzeitig gebunden werden soll. Diese Feuchtigkeit in der staubbelasteten Luft kann zu einem Verbacken von Staub und Filterkuchen im Filtergehäuse führen. Da der Staub und der daraus sich bildende Filterkuchen überwiegend mineralischer Natur sind, führt zusätzliche Feuchtigkeit häufig zu einem mörtelartigen Aushärten des feuchten Filterkuchens. Um derart verbacktes mineralisches Partikelmaterial von den Innenwänden des Filtergehäuses lösen zu können, kann die Filtervorrichtung eine Verformungsaktuatoranordnung aufweisen, welche mit wenigstens einer Wand des Filtergehäuses derart Kraft übertragend in Wechselwirkung steht, dass durch Betätigung der Verformungsaktuatoranordnung die wenigstens eine Wand des Filtergehäuses orthogonal zu seiner Wandfläche verformbar ist.

Zur erleichterten Verformbarkeit der wenigstens einen Wand des Filtergehäuses kann diese aus einem Werkstoff mit einem geringeren Elastizitätsmodul gebildet sein als andere Wände, Wandabschnitte oder Gehäuseabschnitte des Filtergehäuses. Aus Gründen einer möglichst großen Robustheit des Filtergehäuses ist dieses möglichst umfangreich aus Metall, insbesondere aus Metallblech gebildet. Die wenigstens eine verformbare Wand des Filtergehäuses kann aus einem Kunststoff, insbesondere einem Elastomer, wie etwa Gummi oder Silikonkautschuk gebildet sein oder einen solchen Werkstoff wenigstens abschnittsweise umfassen.

Grundsätzlich kann eine mechanisch die wenigstens eine Wand verformende Verformungsaktuatoranordnung vorgesehen sein, die etwa mit einem verlagerbaren Stößel abhängig von der Stößelstellung auf die verformbare Wand einwirkt oder nicht. Bevorzugt umfasst oder ist zur Vermeidung von zusätzlichen Komponenten die Verformungsaktuatoranordnung die Pneumatikvorrichtung oder/und das die staubbelastete Luft vom wenigstens einen Absaugort zum Abblasort fördernde Fördergebläse. Da das Filtergehäuse bevorzugt auf der Saugseite des Fördergebläses angeordnet ist, erzeugt der Betrieb des Fördergebläses im Filtergehäuse einen Unterdruck gegenüber dem Umgebungsdruck, während die oben beschriebene Pneumatikvorrichtung dazu ausgebildet ist, im Filtergehäuse einen Überdruck gegenüber dem Umgebungsdruck zu erzeugen. Durch eine schwellende oder wechselnde Druckbeaufschlagung des Innenraums des Filtergehäuses kann die wenigstens eine verformbare Wand einer Walkverformung unterzogen werden, sodass gebundenes, ausgehärtetes Staubpartikelmaterial, das ursprünglich an der verformbaren Wand anhaftete, davon abplatzt. Dies ist mit vorteilhafter Walkamplitude dann möglich, wenn die Wand, wie oben geschildert, wenigstens teilweise, bevorzugt vollständig, aus einem Kunststoff, insbesondere einem Elastomer, wie etwa Gummi oder Kautschuk, gebildet ist.

Zum Entfernen von abgereinigtem Staubpartikelmaterial aus dem Filtergehäuse, sei es nun Staubpartikelmaterial vom Filterkörper oder von einer Wand des Filtergehäuses, kann das Filtergehäuse eine zwischen einer Öffnungsstellung und einer Schließstellung verstellbare Auslassformation, etwa ein beweglicher oder/und verformbarer Abschnitt eines Filtergehäusebodens, aufweisen, welche in ihrer Öffnungsstellung eine Auslassöffnung im Filtergehäuse öffnet. Durch die Auslassöffnung ist im Filtergehäuse angesammeltes Staubpartikelmaterial aus dem Filtergehäuse entfernbar. Wenigstens der Boden des Filtergehäuses ist bevorzugt als die oben beschriebene verformbare Wand ausgebildet, um so ohne übermäßige Erhöhung der erforderlichen Bauteileanzahl auch die Auslassöffnung ausbilden zu können.

Wie eingangs bereits geschildert, weist die Bodenbearbeitungsmaschine bevorzugt eine Transportvorrichtung auf, durch welches von der Arbeitsvorrichtung abgetragenes Bodenmaterial in Richtung von der Arbeitsvorrichtung weg zu einem Abgabeort förderbar ist. Um die pro Zeiteinheit anfallenden Mengen an abgetragenem Bodenmaterial sicher abtransportieren zu können umfasst die Transportvorrichtung bevorzugt als Transportmittel wenigstens ein Förderband, vorzugsweise wenigstens zwei in Förderrichtung aufeinander folgende Förderbänder, welche zur Reduzierung der Schmutzbelastung der Umgebung der Bodenbearbeitungsmaschine über wenigstens 90 % ihrer Förderstrecke eingehaust ist bzw. sind. Es sind jedoch auch andere Transportvorrichtungen nicht ausgeschlossen, wie beispielsweise Schneckenförderer und dergleichen.

Gemäß einer vorteilhaften Weiterbildung ist das Filtergehäuse derart über der Transportvorrichtung angeordnet ist, dass sich die Auslassöffnung dann, wenn die Auslassformation sich in der Öffnungsstellung befindet, zur Transportvorrichtung hin öffnet. Dann kann das, in der Regel mineralisch gebundene, Staubpartikelmaterial schwerkraftgetrieben das Filtergehäuse verlassen und die Transportvorrichtung erreichen, wo es mit dem abgetragenem Bodenmaterial zum Abgabeort transportiert wird.

Die vorliegende Erfindung wird nachfolgend anhand der beiliegenden Zeichnungen erläutert. Es stellt dar:
- Fig. 1: eine grobschematische Seitenansicht einer erfindungsgemäßen Bodenbearbeitungsmaschine während einer Bodenmaterial abtragenden Bearbeitung,
- Fig. 2: eine ausschnittsweise Vergrößerung des Abwurfbandes der Transportvorrichtung mit daran angeordneter Filtervorrichtung der Bodenbearbeitungsmaschine von Figur 1 in perspektivischer Ansicht,
- Fig. 3: eine perspektivische grobschematische Ansicht der Filtervorrichtung von Figur 2, einschließlich Vorfilter der Bodenbearbeitungsmaschine von Figur 1,
- Fig. 4: eine perspektivische grobschematische Ansicht der Filtervorrichtung von Figur 3, ohne Vorfilter, von schräg vorne und oben,
- Fig. 5: eine vergrößerte grobschematische Seitenansicht des Bypass-Ventils der Filtervorrichtung der Bodenbearbeitungsmaschine von Figur 1, und
- Fig. 6: eine grobschematische beispielhafte Querschnittansicht durch das Filter-material eines Filterkörpers der Filtervorrichtung der Figuren 1 bis 5.

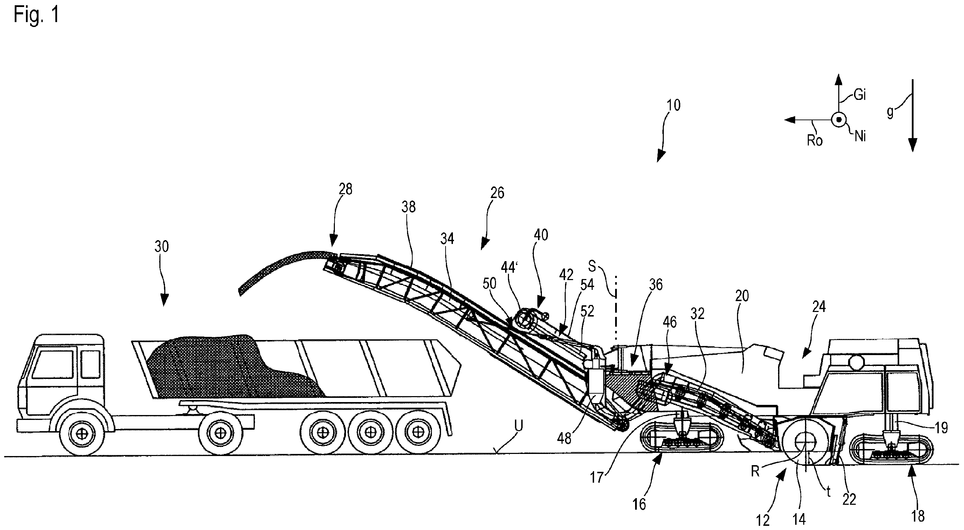

In Figur 1 ist eine erfindungsgemäße Bodenbearbeitungsmaschine (nachfolgend kurz als "Maschine" bezeichnet) allgemein mit 10 bezeichnet. Beispielhaft ist als erfindungsgemäße Maschine 10 eine Straßengroßfräse dargestellt, deren Arbeitsvorrichtung 12 mit einer an sich bekannten Fräswalze 14, wie für Straßengroßfräsen typisch, zwischen den vorderen Fahrwerken 16 und den hinteren Fahrwerken 18 angeordnet ist. Die jeweils vorzugsweise durch einen nicht dargestellten Hydromotor zur Vortriebsbewegung antreibbaren Fahrwerke 16 und 18 sind lenkbar und tragen einen Maschinenrahmen 20, welche wiederum die Arbeitsvorrichtung 12 trägt. Die Maschine 10 ist somit ein selbstfahrendes Fahrzeug.

Die Schwerkraftwirkungsrichtung ist in den Figuren 1 bis 3 mit einem Pfeil g gekennzeichnet.

Die um eine zur Zeichenebene von Figur 1 orthogonale, parallel zur Nickachse Ni der Maschine 10 verlaufende Rotationsachse R rotierbare Fräswalze 14 ist durch einen Fräswalzenkasten 22, welcher die Fräswalze 14 um die Rotationsachse R rotierbar lagert, zur Außenumgebung der Maschine 10 abgeschirmt. Der Fräswalzenkasten 22 ist zum Untergrund U, auf welchem die Maschine 10 mit den Fahrwerken 16 und 18 aufsteht, und welchen die Fräswalze 14 abträgt, hin offen, um die bestimmungsgemäße Bodenbearbeitung der Maschine 10 zu ermöglichen.

Der Maschinenrahmen 20 ist längs der Gierachse Gi höhenverstellbar über vordere Hubsäulen 17 und hintere Hubsäulen 19 mit den Fahrwerken 16 und 18 verbunden, wodurch beispielsweise die Frästiefe t der Fräswalze 14 einstellbar ist.

Die Maschine 10 ist von einem Fahrstand 24 aus steuerbar. Der Fahrstand 24 kann in an sich bekannter Weise überdacht sein.

Von der Fräswalze 14 während der bestimmungsgemäßen Bodenbearbeitung abgetragenes Bodenmaterial wird von einer Transportvorrichtung 26 von der Arbeitsvorrichtung 12 zu einem Abgabeort 28 gefördert, wo es im dargestellten Beispiel einem die Maschine 10 während der Bodenbearbeitung mit Abstand in Richtung der Rollachse Ro vorausfahrend-begleitenden Transport-Lkw 30 übergeben wird.

Die Transportvorrichtung 26 umfasst ein näher bei der Arbeitsvorrichtung 12 gelegenes Aufnahmeband 32 und ein mit dem Aufnahmeband 32 kooperierendes, weiter von der Arbeitsvorrichtung 12 entfernt gelegenes Abwurfband 34. Das Aufnahmeband 32 ist umlauffähig, aber hinsichtlich seiner relativen Orientierung zum Maschinenrahmen 20 unveränderlich am Maschinenrahmen 20 gelagert. An einer Übergabestelle 36 übergibt das Aufnahmeband 32 das von ihm geförderte Material an das Abwurfband 34, welches das übernommene Material bis zum Abgabeort 28 fördert. Das Abwurfband 34 ist ebenfalls umlauffähig, jedoch relativ zum Maschinenrahmen 20 um eine gierachsenparallele Schwenkachse S schwenkbar und um eine zur Schwenkachse S orthogonale Neigeachse neigbar, sodass der Abgabeort 28, welcher mit dem abwerfenden Längsende des Abwurfbands 34 zusammenfällt, in etwa auf der Oberfläche einer Kugelkalotte beweglich ist, um den Abgabeort 28 an das jeweilige Begleitfahrzeug anzupassen.

Die Transportvorrichtung 26 ist längs ihrer gesamten Länge durch eine Einhausung 38 eingehaust, um eine Belastung der Außenumgebung der Transportvorrichtung 26 durch Staub und durch von der Transportvorrichtung 26 möglicherweise herabfallendes Material zu vermeiden. Der über dem Aufnahmeband 32 gelegene Teil der Einhausung 38 ist größtenteils durch den Maschinenrahmen 20 realisiert.

Zur weiteren Verringerung der Schmutzemission, insbesondere Staubemission, der Maschine 10 durch die Arbeitsvorrichtung 12 umfasst diese eine Absaugeinrichtung 40 mit einer Filtervorrichtung 42.

Um anzudeuten, dass die Absaugeinrichtung 40 in unterschiedlicher Weise ausgestaltet sein kann, ist in Figur 1 die Absaugeinrichtung 40 mit einem Fördergebläse 44' am oberen Ende eines Filtergehäuses 54 dargestellt. Die Filtervorrichtung 42 ist auf der Saugseite des Fördergebläses 44' gelegen, sodass durch die Filtervorrichtung 42 gereinigte Luft das Fördergebläse 44' der Absaugeinrichtung 40 von Figur 1 durchsetzt.

Die Absaugeinrichtung 40 saugt staubbelastete Luft an einem Absaugort 46 an, der beispielsweise über dem Aufnahmeband 32 gelegen sein kann, und fördert die staubbelastete Luft in der angegebenen Reihenfolge durch einen Vorfilter 48 und durch die Filtervorrichtung 42 zu einem Abblasort 50, welcher entweder ein Auslass am Fördergebläse 44' sein kann, der direkt in die Außenumgebung der Maschine 10 abbläst, oder welcher über dem Abwurfband 34 eine Mündung in der Einhausung 38 sein kann, durch welche hindurch die gereinigte Luft wieder zurück zur Transportvorrichtung 26 gegeben wird, sodass die gereinigte Luft zusammen mit dem abgetragenen Bodenmaterial am Abgabeort 28 in die Umgebung der Maschine 10 austritt.

In der Filtervorrichtung 42 ist ein Filterkörper 52 gezeigt, dessen Längsachse im Wesentlichen parallel zur Transportrichtung bzw. zur Verlaufsrichtung des Abwurfbandes 34 orientiert ist.

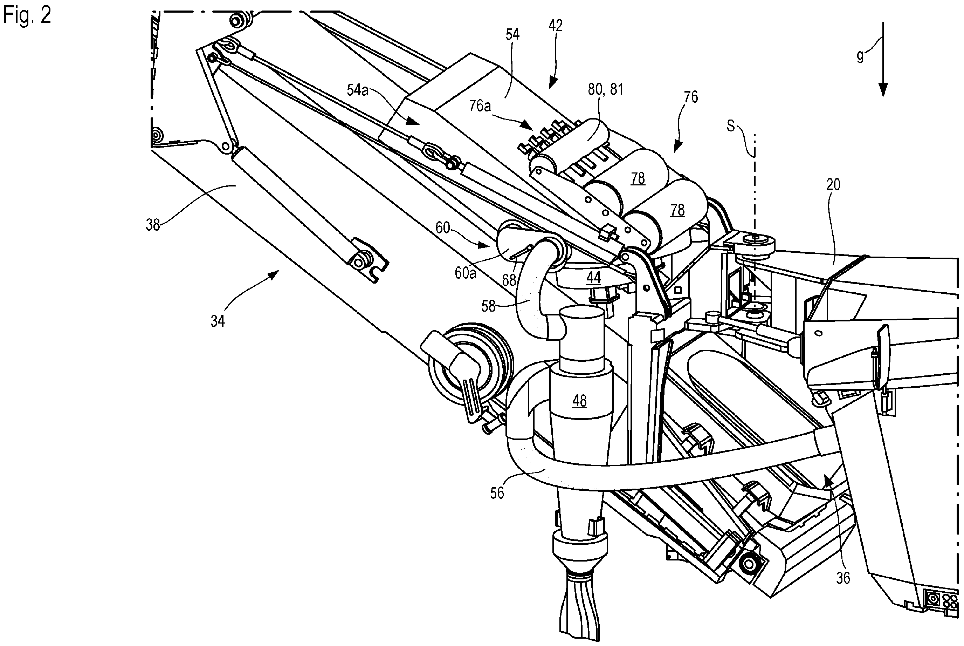

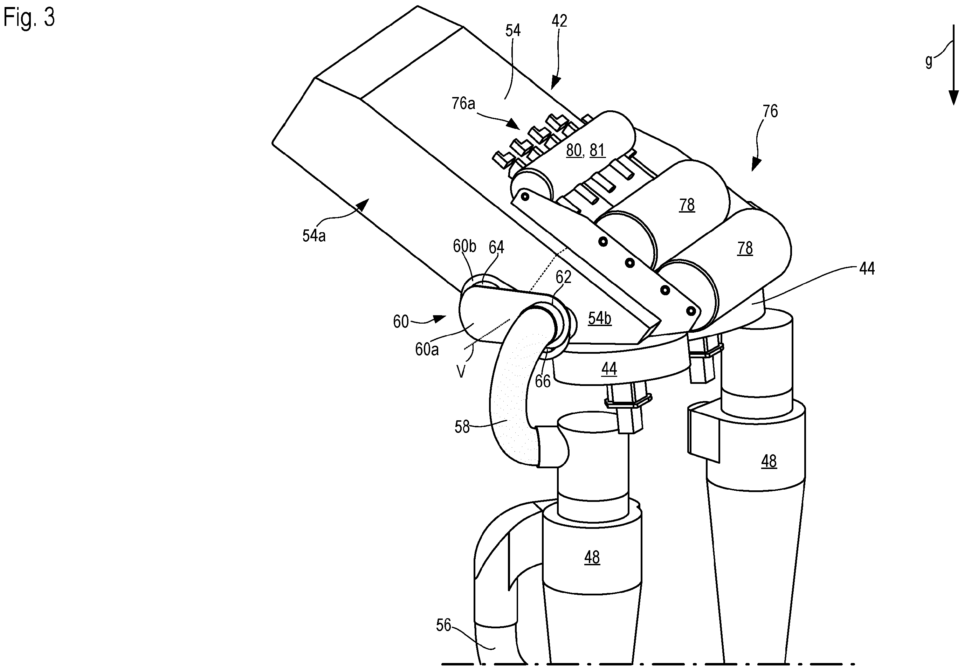

In den Figuren 2 und 3 ist die Filtervorrichtung 42 stärker detailliert als in Figur 1 dargestellt. Die Filtervorrichtung 42 umfasst das Filtergehäuse 54, in welchem im dargestellten Beispiel zwei, ganz allgemein jedoch eine Mehrzahl von Filterkörpern 52 angeordnet sind bzw. ist.

In den Figuren 2 und 3 ist das Fördergebläse 44 abweichend von Figur 1 in einem unteren Abschnitt des Filtergehäuses 54 dargestellt. Jedoch liegt das Filtergehäuse 54 bzw. die Filtervorrichtung 42 wie in Figur 1 funktional auf der Saugseite des Fördergebläses 44.

Figur 3 zeigt insbesondere die spiegelsymmetrische Ausgestaltung der Absaugeinrichtung 40 hinsichtlich der ersten und der zweiten Schlauchleitungen 56 bzw. 58, der Vorfilter 48 und der Fördergebläse 44, welche jeweils je zweifach bezüglich einer von der Gierachse Gi und der Rollachse Ro aufgespannten Spiegelsymmetrieebene vorgesehen sind, wobei die Spiegelsymmetrie für einen gestreckten Bezugszustand gilt, in welchem das Abwurfband 34 und die Transportrichtung des Abwurfbandes 34 in der Spiegelsymmetrieebene gelegen sind.

Durch eine erste Schlauchleitung 56 wird vom Fördergebläse 44 staubbelastete Luft vom Absaugort 46 zu dem als Zyklonfilter ausgestalteten Vorfilter 48 gefördert, wo in an sich bekannter Weise eine Vorreinigung der staubbelasteten Luft erfolgt. Über eine zweite Schlauchleitung 58 wird die vorgereinigte und in der Regel nur noch durch Feinstaub mit einer Korngröße unterhalb einer durch den Zyklonfilter bestimmten Schwellengröße belastete Luft einem Bypass-Ventil 60 zugeführt, von wo aus die vorgereinigte Luft in das Filtergehäuse 54 eintritt.

Das Filtergehäuse 54 weist ein größeres Kompartiment 54a auf, in welchem die Filterkörper 52 aufgenommen sind, und weist ein kleineres Kompartiment 54b auf, in welchem keine Filterkörper 52 aufgenommen sind. Die Filterkörper 52 befinden sich also in einem Innenraum 57 des Filtergehäuses 54 bzw. des Kompartiments 54a.

Das Bypass-Ventil 60 umfasst ein relativ zum Filtergehäuse 54 bewegliches Ventilbauteil 60a und ein filtergehäusefestes Ventilbauteil 60b. Das bewegliche Ventilbauteil 60a kann beispielsweise um eine Ventilachse V relativ zum filtergehäusefesten Ventilbauteil 60b um 180° schwenkbar sein. Mit dem beweglichen Ventilbauteil 60a ist eine Austrittsmündung 62 der zweiten Schlauchleitung 58 als einem bezüglich des Bypass-Ventils 60 stromaufwärtigen Förderkanal über eine vom bevorzugt plattenförmig, eben ausgebildeten beweglichen Ventilbauteil 60a abstehende Anschlussformation 61 verbunden, während das filtergehäusefeste Ventilbauteil 60b zwei Eintrittsmündungen 64 und 66 aufweist, von denen die Eintrittsmündung 64 über eine Anschlussformation 63a in das Kompartiment 54a des Filtergehäuses 54 führt, in welchem Filterkörper 52 aufgenommen sind, wohingegen die Eintrittsmündung 66 über eine Anschlussformation 63b in das Kompartiment 54b ohne Filterkörper führt. Ein Handgriff 68 dient der Verstellung des Bypass-Ventils 60 zwischen seiner Filter-Betriebsstellung, in welcher das Bypass-Ventil 60 die Austrittsmündung 62 mit der Eintrittsmündung 64 verbindet, und der Bypass-Betriebsstellung, in welcher das Bypass-Ventil 60 die Austrittsmündung 62 mit der Eintrittsmündung 66 verbindet. Alternativ kann anstelle des Handgriffs 68 auch ein motorischer Antrieb zur Verstellung des Bypass-Ventils 60 zwischen seinen beiden Betriebsstellungen vorgesehen sein.

Vom filtergehäusefesten Ventilbauteil 60b können von der zum beweglichen Ventilbauteil 60a hinweisenden Grenzfläche 60b je eine die jeweilige Eintrittsmündung 64 bzw. 66 umgebende elastische Dichtungsformation 65a bzw. 65b abstehen, um einen Trennspalt zwischen den Ventilbauteilen 60a und 60b gasdicht zu überbrücken.

Das Fördergebläse 44 saugt Luft stets über das von Filterkörpern 52 freie, vorzugsweise kleinere Kompartiment 54b des Filtergehäuses 54 ab. Je nach Stellung des Bypass-Ventils 60 saugt dabei das Fördergebläse 44 Luft über die Filterkörper 52 im Kompartiment 54a oder unmittelbar über die Eintrittsmündung 66 ohne weitere Filterung an.

Das, vorzugsweise plattenförmige, bewegliche Ventilbauteil 60a ist dabei derart asymmetrisch gebaut, dass es diejenige Eintrittsmündung auf Seiten des filtergehäusefesten Ventilbauteils 60b verschließt, welche nicht mit der Austrittsmündung 62 des beweglichen Ventilbauteil 60a verbunden ist. So wird ein unerwünschtes Ansaugen von Falschluft durch das Fördergebläse 44 vermieden, sodass die gesamte Förderwirkung des Fördergebläses 44 sich auf den tatsächlich zur Förderung bestimmten Luftstrom bezieht.

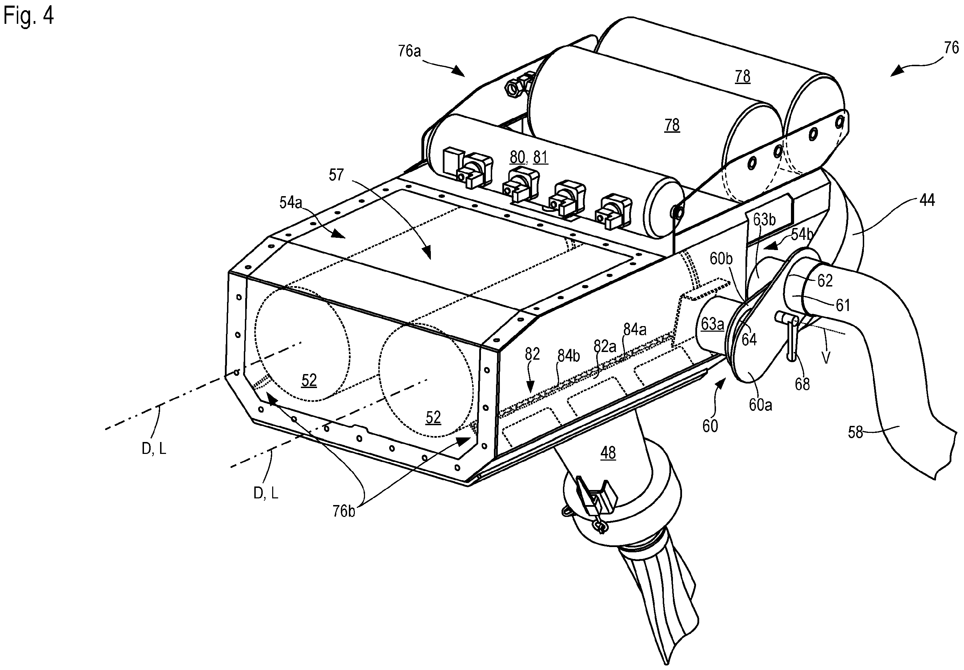

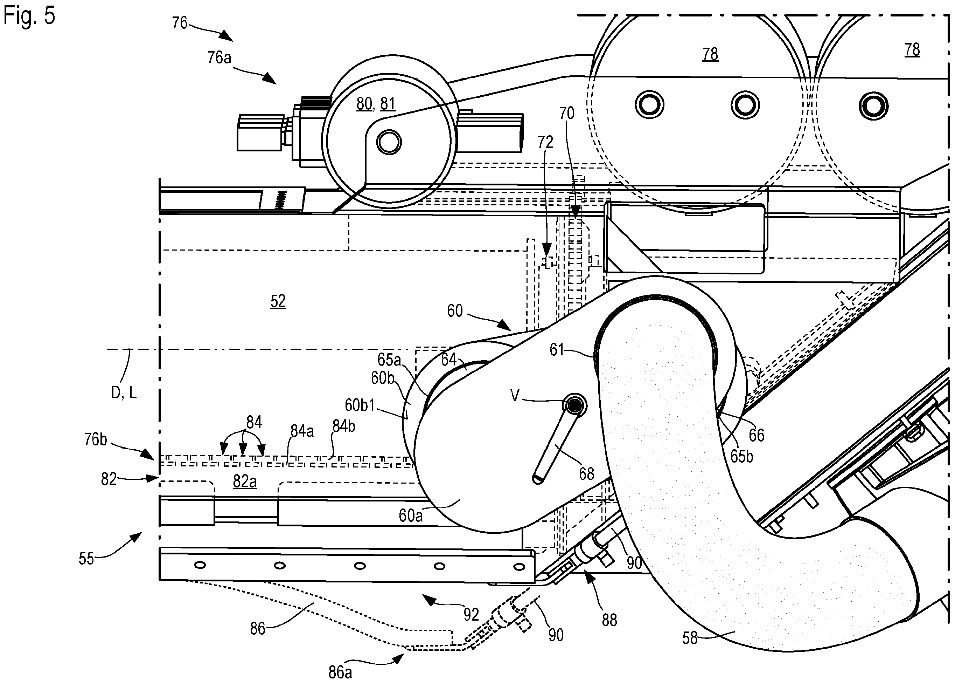

In Figur 4 sind beispielhaft zwei Filterkörper 52 strichliniert im Innenraum 57 des Kompartiment 54a dargestellt. Beide Filterkörper 52 erstrecken sich jeweils längs einer Längsachse L, die auch Drehachse D des jeweiligen Filterkörpers 52 ist. Die Filterkörper 52 sind mit parallelen Längsachsen L angeordnet. Die Filterkörper 52 sind jeweils um die Drehachse D durch einen in Figur 5 gezeigten Drehantrieb 70 drehbar.

Die Filterkörper 52 sind an nur einem Längsende fliegend an Drehlagerungen 72 gelagert, von welchen aus sie längs ihrer Längsachse L bzw. Drehachse D auskragen. Die Drehlagerungen 72, die Ausführungsformen oben genannter Filterkörperaufnahmen darstellen, sind am Filtergehäuse 54 angeordnet und weisen eine Kopplungsformation auf, mit welcher eine Gegenkopplungsformation an einem Filterkörper 52 lösbar koppelbar ist. Dadurch können Filterkörper 52 zum einen schnell getauscht und zum anderen ohne eigene Relativbewegungsmittel drehbar um die Drehachse D im Filtergehäuse 54 angeordnet werden. Der Drehantrieb 70 wirkt bevorzugt unmittelbar mit Drehlagerungen 72 zusammen, sodass der Filterkörper 52 selbst keinerlei Ausbildung für eine unmittelbare Kraftübertragung mit dem Drehantrieb 70 aufweisen muss. Der Drehantrieb 70 und die Drehlagerungen 72 können miteinander kämmende Zahnräder bzw. Zahnstrukturen aufweisen, wobei das Zahnrad des Drehantriebs 70 durch einen Motor angetrieben ist. Dieser Motor kann ein Hydromotor oder, bevorzugt, ein Elektromotor sein.

Durch die Drehbarkeit der Filterkörper 52 kann stets ein anderer Umfangsabschnitt des Filterkörpers 52 so angeordnet werden, dass er in Schwerkraftwirkungsrichtung g weist, sodass folglich die Schwerkraft ein Lösen und Abfallen von Filterkuchen unterstützt, welche sich auf der Schmutzseite von Filtermaterial der Filterkörper 52 im Filterbetrieb ansammeln. Ein Umfangsabschnitt des Filterkörpers 52 weist dann in Schwerkraftwirkungsrichtung g, wenn ein von der Oberfläche des Filtermaterials oder von der Einhüllenden des Filtermaterials ausgehender Normalenvektor wenigstens eine in Schwerkraftwirkungsrichtung verlaufende Komponente aufweist.

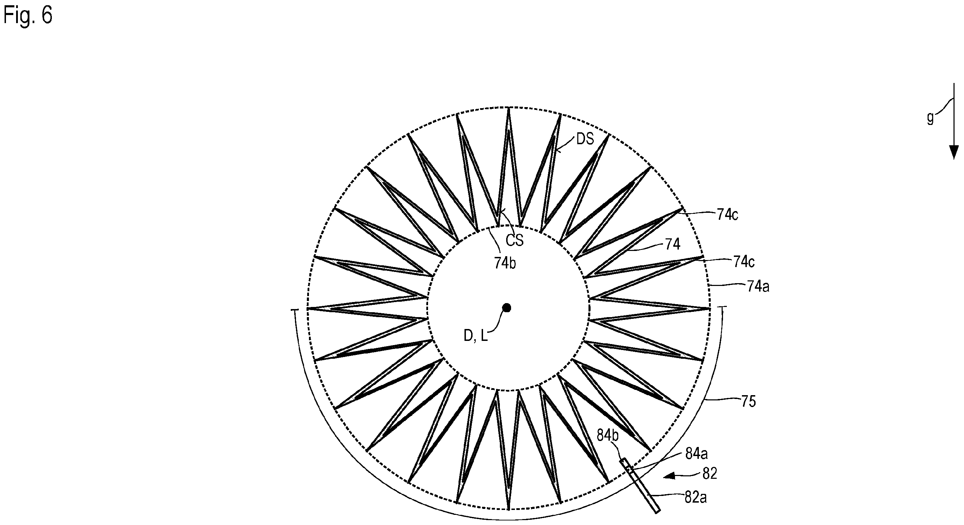

In Figur 6 ist eine simplifizierte Querschnittsansicht durch den Filterkörper 52 in einer zur Drehachse D orthogonalen Schnittebene dargestellt. Das Filtermaterial 74 ist im dargestellten Beispiel ein plissiertes Filtermaterial 74, welches zickzackförmig zwischen einer beispielhaft zylindrischen radial äußeren Einhüllenden 74a und einer beispielhaft zylindrischen radial inneren Einhüllenden 74b um die Drehachse D verläuft. Lediglich zur Erläuterung: Für die beispielhaft in Figur 6 gezeigte Schwerkraftwirkungsrichtung g weist der Umfangsabschnitt 75 des Filtermaterials 74 in Schwerkraftwirkungsrichtung g. Die von der Drehachse D wegweisende Seite des Filtermaterials 74 ist die Schmutzseite DS, auf welcher sich im Filterbetrieb Filterkuchen bildet. Die entgegengesetzte, zur Drehachse D hinweisende Seite des Filtermaterials 74 ist die Reinseite CS, auf welcher nach dem Durchgang durch das Filtermaterial 74 gereinigte Luft strömt. Das Filtermaterial 74 kann ein beliebiges poröses Material sein, wie etwa ein Filtervlies oder ein Filterpapier.

Zur Abreinigung von Filterkuchen vom Filtermaterial 74 der Filterkörper 52 weist die Filtervorrichtung 42 eine Reinigungsvorrichtung 76 auf. Die Reinigungsvorrichtung 76 umfasst im dargestellten Beispiel eine pneumatische Reinigungs-Teilvorrichtung 76a und eine mechanische Reinigungs-Teilvorrichtung 76b.

Die pneumatische Reinigungs-Teilvorrichtung 76a umfasst im dargestellten Beispiel zwei Drucklufttanks 78 und eine mit den Drucklufttanks 78 pneumatisch verbundene Ventilanordnung 80, welche dazu ausgebildet ist, Druckluft aus den Drucklufttanks 78 stoßartig zur Reinseite CS des Filtermaterials 74 der Filterkörper 52 auszulassen, sodass den Luftdruck auf der Reinseite CS gegenüber der Schmutzseite DS erhöhende Druckstöße auf das Filtermaterial 74 ausgeübt werden. Durch diese Druckstöße kann auf der Schmutzseite DS liegender Filterkuchen von der Schmutzseite DS gelöst oder sogar abgeworfen werden. Durch die Druckstöße kann auch eine das Lösen von Filterkuchen auf der Schmutzseite DS unterstützende Verformung des Filtermaterials 74 bewirkt werden. Im Gehäuse der Ventilanordnung 80 kann eine Steuervorrichtung 81 aufgenommen sein, welche den Betrieb der pneumatischen Reinigungs-Teilvorrichtung 76a und des Drehantriebs 70 steuert.

Die von der pneumatischen Reinigungs-Teilvorrichtung 76a bewirkten Druckstöße sind hinsichtlich ihrer Dauer oder/und des Abstandes zwischen zwei aufeinanderfolgenden Druckstößen auf die Drehbewegung der Filterkörper 52 abgestimmt, sodass sichergestellt ist, dass nicht stets der gleiche Umfangsabschnitt des Filtermaterials 74 in Schwerkraftwirkungsrichtung g weist, wenn ein Druckstoß ausgeübt wird. So kann gewährleistet werden, dass während einer Reinigungsprozedur der vollständige Umfang des Filterkörpers 52 von der Reinigungswirkung erfasst wird.

Alternativ oder, wie im dargestellten Ausführungsbeispiel, zusätzlich zur pneumatischen Reinigung ist eine mechanische Reinigungs-Teilvorrichtung 76b vorgesehen, welche die Reinigung des Filtermaterials 74 durch mechanische Belastung desselben unterstützt.

Die mechanische Reinigungs-Teilvorrichtung 76b umfasst eine Abstreiferleiste 82, welche sich längs der Längs- bzw. Drehachse L bzw. D des Filterkörpers 52 erstreckt. Bevorzugt erstreckt sich die Abstreiferleiste durch die radial äußere, im dargestellten Beispiel zylindrische Einhüllende 74a hindurch zur Drehachse D des Filterkörpers 52 hin, wie dies in Figur 6 dargestellt ist. Bei Drehung des Filterkörpers 52 um die Drehachse D streifen dann die radial äußeren Falten 74c des plissierten Filtermaterials an der Abstreiferleiste 82 ab, wodurch zum einen vorübergehend der Abstand zwischen zwei in Umfangsrichtung unmittelbar aufeinanderfolgenden radial äußeren Falten 74c vergrößert wird, sodass zwischen diesen Falten aufgenommener Filterkuchen leichter herausfallen kann, und wodurch zum anderen nach einem Ende des Anlageeingriffs der Abstreiferleiste 82 mit einer radial äußeren Falte 74c eine auf die radial äußere Falte 74c wirkende, in Umfangsrichtung verformende Kraft schlagartig endet, sodass sich die zunächst in Umfangsrichtung verformte radial äußere Falte 74c aufgrund ihrer Materialelastizität in ihre ursprüngliche Gestalt zurückstellt, was eine weitere Filterkuchen lösende Auswirkung haben kann. Schließlich streift die Abstreiferleiste 82 mechanisch an wenigstens einem Teil des Filtermaterials 74 entlang und schabt so Filterkuchen vom Filtermaterial 74 mechanisch ab.

Zur Schonung des porösen und daher möglicherweise empfindlichen Filtermaterials 74 weist die Abstreiferleiste 82 auf ihrer zur Drehachse D hinweisenden Seite eine Mehrzahl von Vorsprüngen 84 auf, welche jeweils von einem Trägerbereich 82a der Abstreiferleiste 82 zur Drehachse D und somit zum Filterkörper 52 hin auskragen. Jeder Vorsprung 84 weist dabei einen näher beim Trägerbereich 82a gelegenen, vorzugsweise einstückig mit diesem verbundenen Stegbereich 84a und einen an den Stegbereich 84a zur Drehachse D hin anschließenden, vorzugsweise einstückig mit diesem verbundenen Abstreifbereich 84b auf. Der Stegbereich 84a eines Vorsprungs 84 ist in Längsrichtung der Abstreiferleiste 82 kürzer ausgebildet als der Abstreifbereich 84b, welcher den Stegbereich 84a vorzugsweise in Längsrichtung der Abstreiferleiste 82 beidseitig überragt. Somit stellt der Abstreifbereich 84b eines jeden Vorsprungs 84 eine möglichst große Abstreiflänge bereit und definiert der Stegbereich 84a den Verformungswiderstand des Vorsprungs 84 und damit die von der Abstreiferleiste 82 auf das Filtermaterial 74 ausgeübte maximale Belastung. Die Abstreiferleiste 82 kann so in vorteilhafter Weise aus nicht-rostendem Stahlblech hergestellt sein. Vorzugsweise sind alle Vorsprünge 84 identisch ausgebildet.

Das Filtergehäuse 54 weist einen im betriebsfertig montierten Zustand der Filtervorrichtung 42 zum Abwurfband 34 hinweisenden Gehäuseboden 86 auf, welcher in Figur 5 strichliniert in einer vom restlichen Filtergehäuse 55, also dem Filtergehäuse 54 ohne Gehäuseboden 86, abgehobenen Stellung gezeigt ist. In der gewöhnlichen, nicht abgehobenen Stellung ist der Gehäuseboden 86 von der Seitenwand des Filtergehäuses 54 verdeckt.

Der Gehäuseboden 86 ist aus einem Elastomer-Material hergestellt, wie etwa Kautschuk, Gummi, Silikongummi usw. Der Gehäuseboden 86 kann durch Einlagen, wie etwa Gewebe oder Gelege, verstärkt sein, um die Reißfestigkeit des Gehäusebodens 86 zu erhöhen. Das restliche Filtergehäuse 55 ist im dargestellten Beispiel aus Metallblech gebaut. Dies muss jedoch nicht so sein. Das Filtergehäuse 54 kann mehr als nur eine Wandung aus einem Elastomer-Material aufweisen.

An seinem in der bezüglich der Schwerkraftwirkungsrichtung g geneigten Einbausituation, wie sie in den Figuren 1 bis 3 erkennbar ist, unteren Ende 86a ist der Gehäuseboden 86 mit einem am Filtergehäuse 54 oder an der Einhausung 38 festgelegten Aktuator 88 gekoppelt. Der Aktuator 88 kann ein pneumatischer oder ein hydraulischer Aktuator sein und kann etwa eine aus einem Zylinder ausfahrbare und in diesen einziehbare Kolbenstange als Betätigungsglied 90 umfassen, oder kann ein elektrischer oder elektromagnetischer Aktuator sein, dessen Betätigungsglied 90 elektrisch oder elektromagnetisch verlagerbar ist.

In seiner ausgefahrenen Stellung ist das Betätigungsglied 90 des Aktuators 88 strichliniert gezeigt. In dieser ausgefahrenen Stellung des Betätigungsglied 90 ist das untere Längsende 86a des Gehäuseboden 86 vom restlichen Filtergehäuse 55 abgehoben, sodass zwischen dem Gehäuseboden 86, genauer zwischen dessen unterem Längsende 86a und dem restlichen Filtergehäuse 55 eine Auslassöffnung 92 gebildet ist, durch welche hindurch Material zur Transportvorrichtung 26, genauer zum Abwurfband 34 hin aus dem Innenraum 57 des Filtergehäuses 54 ausgelassen werden kann, welches sich im Filtergehäuse 54, insbesondere in dem die Filterkörper 52 aufnehmenden Kompartiment 54a im Laufe des Betriebs angesammelt hat. Es handelt sich dabei in der Regel um Material, welches die abgesaugte Luft mitgeführt hat, und welches durch die Filterkörper 52 aus der Luft herausgefiltert wurde oder/und welches sich an den Innenwänden des Filtergehäuses 54 abgelagert hat. Das Material kann abgetragenes Bodenmaterial in Form von Staub bis hin zu Scherben von verbacktem Material umfassen.

Das abgetragene Bodenmaterial weist üblicherweise eine hohe Feuchte auf, da in den Fräswalzenkasten 22 üblicherweise Wasser eingespritzt wird, um eine übermäßige Staubentwicklung zu unterbinden und die Fräsmeißel zu kühlen. Das mineralische abgetragene Bodenmaterial neigt in feuchter Umgebung zum Verbacken, eine Eigenschaft die man sich gerade für das Binden von Staub durch Einspritzen von Wasser zunutze macht. Es können sich so mineralische, steinharte Ablagerungen an den Innenflächen des Filtergehäuses bilden.

Die verformbare Ausbildung des Gehäusebodens 86 durch Verwendung von Elastomer-Material hat noch eine weitere vorteilhafte Wirkung: durch gezielte Verformbarkeit des Gehäuseboden 86 kann daran anbackendes Bodenmaterial vom Gehäuseboden 86 gelöst werden. Gleiches gilt für jede andere Wand des Filtergehäuses 54, die ebenfalls durch Verformbarkeit orthogonal zu ihrer Wandfläche von daran anbackendem Bodenmaterial befreit werden kann. Deshalb ist es von Vorteil, wenn weitere Wände des Filtergehäuses 54 aus Elastomer-Material oder durch dünnes Stahlblech mit verhältnismäßig geringem Biege- oder Walkwiderstand gebildet sind.

Die Verformung einer elastomeren Wand des Filtergehäuses 54 kann in einfacher Weise durch die Reinigungsvorrichtung 76, genauer durch die pneumatische Reinigungs-Teilvorrichtung 76a erfolgen. Wenn diese den Druck im Innenraum 57 des Filtergehäuses 54 erhöht, Beulen sich die verformbaren Wände des Filtergehäuses 54 nach außen, wodurch daran festbackende, gebundene mineralische Schichten von abgetragenem Bodenmaterial abplatzen und als Scherben im Innenraum 57 des Filtergehäuses 54 lose herumliegen können. Die abgeplatzten Scherben können dann durch die Auslassöffnung 92 an die Transportvorrichtung 26 abgegeben und von dieser zum Abwurf am Abgabeort 28 transportiert werden. Die Ventilanordnung 80 kann in einfacher Weise über daran angeschlossene Pneumatik-Leitungen den Druck im Innenraum 57 des Filtergehäuses 54, insbesondere im Kompartiment 54a, erhöhen.

Die Ventilanordnung 80 kann von Fahrstand 24 aus betätigbar sein. Die Steuervorrichtung 81 kann außerdem einen Reinigungsvorgang des Filtergehäuses 54 in vorbestimmten Zeitabständen durch entsprechende Ansteuerung der Ventilanordnung 80 auslösen.

So, wie die pneumatische Reinigungs-Teilvorrichtung 76a einen Überdruck im Filtergehäuse 54 erzeugen kann, kann das Fördergebläse 44 einen Unterdruck im Filtergehäuse 54 erzeugen, da das Filtergehäuse 54 auf der Saugseite des Fördergebläses 44 liegt. Durch geeignete Abstimmung des Betriebs der pneumatischen Reinigungs-Teilvorrichtung 76a und des Fördergebläses 44 aufeinander, etwa durch einen alternierenden Betrieb dieser Einrichtungen, kann das Filtergehäuse 54 und damit seine Wände einer wechselnden Überdruck-Unterdruck-Belastung ausgesetzt werden, was eine Walkbewegung von Wänden des Filtergehäuses 54 zur Ablösung von daran anbackendem ausgehärtetem Bodenmaterial weiter erleichtert.

Die Drucklufttanks 78 können, gegebenenfalls ebenfalls über die Ventilanordnung 80, an einen bordeigenen Kompressor angeschlossen sein, der für ein konstantes oder quasi-konstantes Druckluftniveau in den Drucklufttanks 78 sorgt.

## Patentansprüche

1. Mobile Bodenbearbeitungsmaschine (10), wie etwa Straßenfräse, Recycler oder Surface-Miner, umfassend
- eine Arbeitsvorrichtung (12) zur Material abtragenden Bearbeitung eines Bereichs eines Bodens (U), und
- eine Absaugeinrichtung (40), welche dazu ausgebildet ist, staubbelastete Luft an wenigstens einem Absaugort (46) aus wenigstens einem Maschinenbereich abzusaugen und abgesaugte Luft an einem vom Absaugort (46) verschiedenen Abblasort (50) auszublasen,
wobei die Absaugeinrichtung (40) eine längs eines Betriebsströmungswegs vom wenigstens einen Absaugort (46) zum Abblasort (50) angeordnete Filtervorrichtung (42) aufweist, wobei die Filtervorrichtung (42) umfasst:
- ein Filtergehäuse (54),
- einen im Filtergehäuse (54) aufgenommenen Filterkörper (52), wobei der Filterkörper (52) dazu ausgebildet ist, Staubpartikel aus der die Filtervorrichtung (42) durchströmenden Luft zu entfernen, und
- eine Reinigungsvorrichtung (76), welche dazu ausgebildet ist, Staubpartikel, die sich im Filterbetrieb am Filterkörper (52) ansammeln, vom Filterkörper (52) zu entfernen,
**dadurch gekennzeichnet, dass** der Filterkörper (52) um eine Drehachse (D) drehbar im Filtergehäuse (54) aufgenommen ist, wobei die Filtervorrichtung (42) einen Drehantrieb (70) aufweist, welcher dazu ausgebildet ist, den Filterkörper (50) in Drehung zu versetzen.

2. Mobile Bodenbearbeitungsmaschine (10) nach Anspruch 1,
**dadurch gekennzeichnet, dass** parallel zur Drehachse (D), mit Abstand von dieser eine Abstreiferleiste (82) angeordnet ist, welche während einer Drehbewegung des Filterkörpers (52) intermittierend oder dauerhaft in Berührkontakt mit dem Filterkörper (52) steht.

3. Mobile Bodenbearbeitungsmaschine (10) nach Anspruch 2,
**dadurch gekennzeichnet, dass** die Abstreiferleiste (82) an ihrem mit dem Filterkörper (52) in Berührkontakt stehenden Randbereich mit längs der Drehachse (D) aufeinander folgenden Vorsprüngen (84) ausgebildet ist, welche von einem dem Filterkörper (52) ferner liegenden Trägerbereich (82a) der Abstreiferleiste (82) auskragen.

4. Mobile Bodenbearbeitungsmaschine (10) nach Anspruch 3,
**dadurch gekennzeichnet, dass** wenigstens ein Teil der Vorsprünge (84) einen vom Trägerbereich (82a) weiter entfernt gelegenen, axial bezogen auf die Drehachse (D) längeren Abstreifbereich (84b) und einen axial schmäleren, den Abstreifbereich (84b) mit dem Trägerbereich (82a) verbindenden Stegbereich (84a) aufweist.

5. Mobile Bodenbearbeitungsmaschine (10) nach einem der vorhergehenden Ansprüche,
**dadurch gekennzeichnet, dass** der Filterkörper (52) ein um die Drehachse (D) umlaufendes poröses Filtermaterial (74) aufweist, welches in Umlaufrichtung alternierend konvex und konkav gekrümmt ist, wobei die Abstreiferleiste (82) radial in einen Bereich des Filterkörpers (52) einragt, welcher zwischen den Orten (74a, 74b) radial größter Annäherung des Filtermaterials (74) an die Drehachse (D) und radial größter Entfernung des Filtermaterials (74) von der Drehachse (D) gelegen ist.

6. Mobile Bodenbearbeitungsmaschine (10) nach einem der vorhergehenden Ansprüche,
**dadurch gekennzeichnet, dass** der Filterkörper (52) an einem Längsende mit einer Filterkörperaufnahme lösbar koppelbar ist, wobei die Filterkörperaufnahme (72) um die Drehachse (D) drehbar im Filtergehäuse (54) aufgenommen ist.

7. Mobile Bodenbearbeitungsmaschine (10) nach einem der vorhergehenden Ansprüche,
**dadurch gekennzeichnet, dass** der Filterkörper (52) eine bezüglich einer Betriebsströmungsrichtung der staubbelasteten Luft vom Absaugort (46) zum Abblasort (50) stromaufwärts eines die Filterwirkung des Filterkörpers (52) bereitstellenden porösen Filtermaterials (74) gelegenen Schmutzseite (DS) und eine stromabwärts des Filtermaterials (74) gelegene Reinseite (CS) aufweist, wobei die Reinigungsvorrichtung (76) eine Pneumatikvorrichtung (76a) aufweist, welche dazu ausgebildet ist, auf der Reinseite (CS) den Luftdruck über den auf der Schmutzseite (DS) herrschenden Luftdruck hinaus zu erhöhen.

8. Mobile Bodenbearbeitungsmaschine (10) nach einem der vorhergehenden Ansprüche,
**dadurch gekennzeichnet, dass** die Reinigungsvorrichtung (76) eine Steuervorrichtung (81) aufweist, welche dazu ausgebildet ist, den Drehantrieb (70) und die Pneumatikvorrichtung (76a) gleichzeitig zu betreiben.

9. Mobile Bodenbearbeitungsmaschine (10) nach Anspruch 8,
**dadurch gekennzeichnet, dass** die Steuervorrichtung (81) dazu ausgebildet ist, die Pneumatikvorrichtung (76a) zur stoßartigen Abgabe von Pneumatikimpulsen anzutreiben, wobei die Dauer eines Pneumatikimpulses oder/und der zeitliche Abstand zwischen zwei unmittelbar aufeinander folgenden Pneumatikimpulsen vom Kehrwert der Drehzahl des Filterkörpers (52) verschieden ist, vorzugsweise kleiner ist als dieser.

10. Mobile Bodenbearbeitungsmaschine (10) nach einem der vorhergehenden Ansprüche,
**dadurch gekennzeichnet, dass** die Filtervorrichtung (42) ein zwischen wenigstens zwei unterschiedlichen Betriebsstellungen verstellbares Bypass-Ventil (60) aufweist, wobei eine Filter-Betriebsstellung den wenigstens einen Absaugort (46) mit dem Abblasort (50) unter Durchströmung des Filterkörpers (52) verbindet, und wobei eine Bypass-Betriebsstellung den wenigstens einen Absaugort (46) mit dem Abblasort (50) unter Umgehung des Filterkörpers (52) verbindet.

11. Mobile Bodenbearbeitungsmaschine (10) nach Anspruch 10,
**dadurch gekennzeichnet, dass** das Bypass-Ventil (60) in der Filter-Betriebsstellung den wenigstens einen Absaugort (46) derart mit dem Filtergehäuse (54) verbindet, dass ein den Filterkörper (52) aufnehmender Innenraum (57) des Filtergehäuses (54) Teil der den wenigstens einen Absaugort (46) mit dem Abblasort (50) verbindenden Strömungsleitung (56, 58) für staubbelastete Luft ist, und dass das Bypass-Ventil (60) in der Bypass-Betriebsstellung den wenigstens einen Absaugort (46) mit dem Abblasort (50) unter Umgehung des den Filterkörper (52) aufnehmenden Innenraums (57) des Filtergehäuses (54) verbindet.

12. Mobile Bodenbearbeitungsmaschine (10) nach einem der vorhergehenden Ansprüche,
**dadurch gekennzeichnet, dass** die Filtervorrichtung (42) eine Verformungsaktuatoranordnung (44, 76a) aufweist, welche mit wenigstens einer Wand (86) des Filtergehäuses (54) derart Kraft übertragend in Wechselwirkung steht, dass durch Betätigung der Verformungsaktuatoranordnung (44, 76a) die wenigstens eine Wand (86) des Filtergehäuses (54) orthogonal zu seiner Wandfläche verformbar ist.

13. Mobile Bodenbearbeitungsmaschine (10) nach Anspruch 12, unter Einbeziehung des Anspruchs 7,
**dadurch gekennzeichnet, dass** die Verformungsaktuatoranordnung (44, 76a) die Pneumatikvorrichtung (76a) oder/und ein staubbelastete Luft vom wenigstens einen Absaugort (46) zum Abblasort (50) förderndes Fördergebläse (44, 44') umfasst oder ist.

14. Mobile Bodenbearbeitungsmaschine (10) nach einem der vorhergehenden Ansprüche,
**dadurch gekennzeichnet, dass** das Filtergehäuse (54) eine zwischen einer Öffnungsstellung und einer Schließstellung verstellbare Auslassformation (86a) aufweist, welche in ihrer Öffnungsstellung eine Auslassöffnung (92) im Filtergehäuse (54) öffnet, durch welche im Filtergehäuse (54) angesammeltes Staubpartikelmaterial aus dem Filtergehäuse (54) entfernbar ist.

15. Mobile Bodenbearbeitungsmaschine (10) nach Anspruch 14,
**dadurch gekennzeichnet, dass** die Bodenbearbeitungsmaschine (10) eine Transportvorrichtung (26) aufweist, durch welches von der Arbeitsvorrichtung (12) abgetragenes Bodenmaterial in Richtung von der Arbeitsvorrichtung (12) weg zu einem Abgabeort (28) förderbar ist, wobei das Filtergehäuse (54) derart über der Transportvorrichtung (26) angeordnet ist, dass sich die Auslassöffnung (92) dann, wenn die Auslassformation (86a) sich in der Öffnungsstellung befindet, zur Transportvorrichtung (26) hin öffnet.

## Claims

1. A mobile earth working machine (10), for example a road milling machine, recycler, or surface miner, encompassing:
- a working apparatus (12) for material-removing working of a region of a substrate (U); and
- an extraction device (40) that is embodied to extract dust-laden air from at least one machine region at at least one extraction location (46), and to exhaust extracted air at a discharge location (50) different from the extraction location (46),
the extraction device (40) comprising a filter apparatus (42) arranged along an operational flow path from the at least one extraction location (46) to the discharge location (50), the filter apparatus (42) encompassing:
- a filter housing (54);
- a filter element (52) received in the filter housing (54), the filter element (52) being embodied to remove dust particles from the air flowing through the filter apparatus (42); and
- a cleaning apparatus (76) that is embodied to remove from the filter element (52) dust particles that accumulate on the filter element (52) during filtering operation,
**characterized in that** the filter element (52) is received in the filter housing (54) rotatably around a rotation axis (D), the filter apparatus (42) comprising a rotary drive system (70) that is embodied to impart rotation to the filter element (50).

2. The mobile earth working machine (10) according to Claim 1,
**characterized in that** a wiper bar (82), which is in direct contact with the filter element (52) intermittently or continuously during a rotary motion of the filter element (52), is arranged parallel to the rotation axis (D) at a distance therefrom.

3. The mobile earth working machine (10) according to Claim 2,
**characterized in that** the wiper bar (82) is embodied, on its edge region that is in direct contact with the filter element (52), with projections (84) which follow one along the rotation axis (D) and which protrude from a carrier region (82a), located farther from the filter element (52), of the wiper bar (82).

4. The mobile earth working machine (10) according to Claim 3,
**characterized in that** at least some of the projections (84) have a wiping region (84b) that is located farther away from the carrier region (82a) and is axially longer with respect to the rotation axis (D), and an axially narrower strut region (84a) that connects the wiping region (84b) to the carrier region (82a).

5. The mobile earth working machine (10) according to one of the preceding claims,
**characterized in that** the filter element (52) comprises a porous filter material (74) that encircles the rotation axis (D) and is curved alternatingly convexly and concavely in a circumferential direction; the wiper bar (82) projecting radially into a region of the filter element (52) which is located between the points (74a, 74b) of radially greatest proximity of the filter material (74) to the rotation axis (D) and radially greatest distance of the filter material (74) from the rotation axis (D).

6. The mobile earth working machine (10) according to one of the preceding claims,
**characterized in that** the filter element (52) is detachably coupled at one longitudinal end to a filter element receptacle, the filter element receptacle (72) being received in the filter housing (54) rotatably around the rotation axis (D).

7. The mobile earth working machine (10) according to one of the preceding claims,
**characterized in that** the filter element (52) has a dirt side (DS) located upstream, in terms of an operational flow direction of the dust-laden air from the extraction location (46) to the discharge location (50), from a porous filter material (74) furnishing the filtering action of the filter element (52), and a clean side (CS) located downstream from the filter material (74); the cleaning apparatus (76) comprising a pneumatic apparatus (76a) that is embodied to increase the air pressure on the clean side (CS) above the air pressure existing on the dirt side (DS).

8. The mobile earth working machine (10) according to one of the preceding claims,
**characterized in that** the cleaning apparatus (76) comprises a control apparatus (81) that is embodied to operate the rotary drive system (70) and the pneumatic apparatus (76a) simultaneously.

9. The mobile earth working machine (10) according to Claim 8,
**characterized in that** the control apparatus (81) is embodied to drive the pneumatic apparatus (76a) for percussive delivery of pneumatic pulses; the duration of a pneumatic pulse, and/or the time interval between two immediately successive pneumatic pulses, being different from, preferably being less than, the reciprocal of the rotation speed of the filter element (52).

10. The mobile earth working machine (10) according to one of the preceding claims,
**characterized in that** the filter apparatus (42) comprises a bypass valve (60) shiftable between two different operating positions, such that a filtering operating position connects the at least one extraction location (46) to the exhaust location (50) with passage through the filter element (52), and a bypass operating position connects the at least one extraction location (46) to the exhaust location (50) while bypassing the filter element (52).

11. The mobile earth working machine (10) according to Claim 10,
**characterized in that** the bypass valve (60), in the filtering operating position, connects the at least one extraction location (46) to the filter housing (54) in such a way that an interior space (57) of the filter housing (54) which receives the filter element (52) is part of the flow duct (56, 58) for dust-laden air which connects the at least one extraction location (46) to the discharge location (50); and the bypass valve (60), in the bypass operating position, connects the at least one extraction location (46) to the discharge location (50) while bypassing the interior space (57) of the filter housing (54) which receives the filter element (52).

12. The mobile earth working machine (10) according to one of the preceding claims,
**characterized in that** the filter apparatus (42) comprises a deformation actuator arrangement (44, 76a) that interacts force-transferringly with at least one wall (86) of the filter housing (54) in such a way that by actuation of the deformation actuator arrangement (44, 76a), the at least one wall (86) of the filter housing (54) is deformable orthogonally to its wall surface.

13. The mobile earth working machine (10) according to Claim 12, including Claim 7,
**characterized in that** the deformation actuator arrangement (44, 76a) encompasses or is the pneumatic apparatus (76a) and/or a conveying fan (44, 44') that conveys dust-laden air from at least one extraction location (46) to the discharge location (50).

14. The mobile earth working machine (10) according to one of the preceding claims,
**characterized in that** the filter housing (54) comprises an outlet configuration (86a) which is displaceable between an open position and a closed position and which, in its open position, opens an outlet opening (92) in the filter housing (54) through which dust particle material that has accumulated in the filter housing (54) is removable from the filter housing (54).

15. The mobile earth working machine (10) according to Claim 14,
**characterized in that** the earth working machine (10) comprises a transport apparatus (26) with which substrate material removed by the working apparatus (12) is conveyable away from the working apparatus (12) to a delivery location (28); the filter housing (54) being arranged above the transport apparatus (26) in such a way that when the outlet configuration (86a) is in the open position, the outlet opening (92) opens toward the transport apparatus (26).

## Revendications

1. Machine de traitement du sol mobile (10), telle qu'une fraiseuse routière, un recycleur ou un surface miner, comprenant
- un dispositif de travail (12) pour le traitement par enlèvement de matière d'une zone d'un sol (U), et
- un dispositif d'aspiration (40), qui est conçu pour aspirer l'air chargé de poussière en au moins un lieu d'aspiration (46) hors d'au moins une zone de la machine et pour évacuer l'air aspiré en un lieu de soufflage (50) différent du lieu d'aspiration (46),
dans lequel le dispositif d'aspiration (40) présente un dispositif de filtre (42) disposé le long d'un trajet d'écoulement de fonctionnement depuis ledit au moins un lieu d'aspiration (46) jusqu'au lieu de soufflage (50), dans lequel le dispositif de filtre (42) comprend :
- un boîtier de filtre (54),
- un corps de filtre (52) logé dans le boîtier de filtre (54), le corps de filtre (52) étant conçu pour éliminer les particules de poussière de l'air traversant le dispositif de filtre (42), et
- un dispositif de nettoyage (76), qui est conçu pour éliminer du corps de filtre (52) les particules de poussière qui s'accumulent sur le corps de filtre (52) pendant le fonctionnement du filtre,
**caractérisé en ce que** le corps de filtre (52) est logé dans le boîtier de filtre (54) de manière à pouvoir tourner autour d'un axe de rotation (D), le dispositif de filtre (42) présentant un entraînement rotatif (70) qui est conçu pour mettre en rotation le corps de filtre (50).

2. Machine de traitement du sol mobile (10) selon la revendication 1,
**caractérisée en ce que** parallèlement à l'axe de rotation (D), à distance de celui-ci, est disposée une barre de raclage (82) qui, pendant un mouvement de rotation du corps de filtre (52), est en contact intermittent ou permanent avec le corps de filtre (52).

3. Machine de traitement du sol mobile (10) selon la revendication 2,
**caractérisée en ce que** la barre de raclage (82) est réalisée, sur sa zone de bord en contact avec le corps de filtre (52), avec des saillies (84) successives le long de l'axe de rotation (D), qui font saillie d'une zone de support (82a) de la barre de raclage (82) plus éloignée du corps de filtre (52).

4. Machine de traitement du sol mobile (10) selon la revendication 3,
**caractérisée en ce qu'**au moins une partie des saillies (84) présente une zone de raclage (84b) plus éloignée de la zone de support (82a) et plus longue axialement par rapport à l'axe de rotation (D), et une zone de nervure (84a) plus étroite axialement, reliant la zone de raclage (84b) à la zone de support (82a).

5. Machine de traitement du sol mobile (10) selon l'une des revendications précédentes,
**caractérisée en ce que** le corps de filtre (52) présente un matériau filtrant poreux (74) tournant autour de l'axe de rotation (D), qui est courbé de manière alternativement convexe et concave dans le sens de rotation, la barre de raclage (82) pénétrant radialement dans une zone du corps de filtre (52) qui est située entre les endroits (74a, 74b) où le matériau filtrant (74) se rapproche le plus radialement de l'axe de rotation (D) et où le matériau filtrant (74) s'éloigne le plus radialement de l'axe de rotation (D).

6. Machine de traitement du sol mobile (10) selon l'une des revendications précédentes,
**caractérisée en ce que** le corps de filtre (52) peut être couplé de manière amovible à une extrémité longitudinale à un logement de corps de filtre, le logement de corps de filtre (72) étant logé dans le boîtier de filtre (54) de manière à pouvoir tourner autour de l'axe de rotation (D).

7. Machine de traitement du sol mobile (10) selon l'une des revendications précédentes,
**caractérisée en ce que** le corps de filtre (52) présente un côté sale (DS) situé en amont d'un matériau filtrant poreux (74) fournissant l'effet filtrant du corps de filtre (52) par rapport à une direction d'écoulement de fonctionnement de l'air chargé de poussière du lieu d'aspiration (46) au lieu de soufflage (50) et un côté propre (CS) situé en aval du matériau filtrant (74), le dispositif de nettoyage (76) comprenant un dispositif pneumatique (76a) qui est conçu pour augmenter, sur le côté propre (CS), la pression d'air au-delà de la pression d'air régnant sur le côté sale (DS).

8. Machine de traitement du sol mobile (10) selon l'une des revendications précédentes,
**caractérisée en ce que** le dispositif de nettoyage (76) comporte un dispositif de commande (81) configuré pour actionner simultanément l'entraînement rotatif (70) et le dispositif pneumatique (76a).

9. Machine de traitement du sol mobile (10) selon la revendication 8,
**caractérisée en ce que** le dispositif de commande (81) est conçu pour entraîner le dispositif pneumatique (76a) pour délivrer par à-coups des impulsions pneumatiques, dans lequel la durée d'une impulsion pneumatique ou/et l'intervalle de temps entre deux impulsions pneumatiques immédiatement successives est différent de la valeur inverse de la vitesse de rotation du corps de filtre (52), de préférence inférieur à cette valeur.

10. Machine de traitement du sol mobile (10) selon l'une des revendications précédentes,
**caractérisée en ce que** le dispositif de filtre (42) comporte une soupape de dérivation (60) réglable entre au moins deux positions de fonctionnement différentes, une position de fonctionnement de filtration reliant ledit au moins un lieu d'aspiration (46) au lieu de soufflage (50) en traversant le corps de filtre (52), et une position de fonctionnement de dérivation reliant ledit au moins un lieu d'aspiration (46) au lieu de soufflage (50) en contournant le corps de filtre (52).

11. Machine de traitement du sol mobile (10) selon la revendication 10, **caractérisée en ce que** la soupape de dérivation (60), dans la position de fonctionnement du filtre, relie ledit au moins un lieu d'aspiration (46) au boîtier de filtre (54) de telle sorte qu'un espace intérieur (57) du boîtier de filtre (54), recevant le corps de filtre (52), fait partie de la conduite d'écoulement (56, 58) pour l'air chargé de poussière, et **en ce que** la soupape de dérivation (60), dans la position de fonctionnement en dérivation, relie ledit au moins un lieu d'aspiration (46) au lieu de soufflage (50) en contournant l'espace intérieur (57) du boîtier de filtre (54) qui reçoit le corps de filtre (52).

12. Machine de traitement du sol mobile (10) selon l'une quelconque des revendications précédentes,
**caractérisée en ce que** le dispositif de filtre (42) comporte un ensemble actionneur de déformation (44, 76a) qui interagit avec au moins une paroi (86) du boîtier de filtre (54) en transmettant des forces de telle sorte que l'actionnement de l'ensemble actionneur de déformation (44, 76a) permet de déformer ladite au moins une paroi (86) du boîtier de filtre (54) orthogonalement à sa surface de paroi.

13. Machine de traitement du sol mobile (10) selon la revendication 12, en tenant compte de la revendication 7,
**caractérisée en ce que** l'agencement d'actionneurs de déformation (44, 76a) comprend ou est le dispositif pneumatique (76a) ou/et un ventilateur de transport (44, 44') transportant de l'air chargé de poussière depuis au moins un lieu d'aspiration (46) vers le lieu de soufflage (50).

14. Machine de traitement du sol mobile (10) selon l'une des revendications précédentes,
**caractérisée en ce que** le boîtier de filtre (54) présente une formation de sortie (86a) réglable entre une position d'ouverture et une position de fermeture, qui, dans sa position d'ouverture, ouvre une ouverture de sortie (92) dans le boîtier de filtre (54), par laquelle le matériau particulaire de poussière accumulé dans le boîtier de filtre (54) peut être éliminé du boîtier de filtre (54).

15. Machine de traitement du sol mobile (10) selon la revendication 14,
**caractérisée en ce que** la machine de traitement du sol mobile (10) présente un dispositif de transport (26) par lequel le matériau du sol enlevé par le dispositif de travail (12) peut être transporté en direction d'un lieu de décharge (28) en s'éloignant du dispositif de travail (12), dans lequel le boîtier de filtre (54) est disposé au-dessus du dispositif de transport (26) de telle sorte que l'ouverture de sortie (92) s'ouvre vers le dispositif de transport (26) lorsque la formation de sortie (86a) se trouve dans la position d'ouverture.
